(19) **Europäisches Patentamt / European Patent Office / Office européen des brevets**

(11) **EP 2 879 118 A1**

(12) **EUROPEAN PATENT APPLICATION**
published in accordance with Art. 153(4) EPC

(43) Date of publication:
**03.06.2015 Bulletin 2015/23**

(21) Application number: **13822934.9**

(22) Date of filing: **28.05.2013**

(51) Int Cl.:
**G09B 5/00** *(2006.01)* **G06F 17/30** *(2006.01)*
**G06Q 50/20** *(2012.01)* **G09B 19/00** *(2006.01)*

(86) International application number:
**PCT/JP2013/064780**

(87) International publication number:
**WO 2014/017164 (30.01.2014 Gazette 2014/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **26.07.2012 JP 2012165606**

(71) Applicant: **Sony Corporation Tokyo 108-0075 (JP)**

(72) Inventors:
• **KAMIMAEDA, Naoki**
  **Tokyo 108-0075 (JP)**

• **MIYAHARA, Masanori**
  **Tokyo 108-0075 (JP)**
• **TSUNODA, Tomohiro**
  **Tokyo 108-0075 (JP)**
• **KANEMOTO, Katsuyoshi**
  **Tokyo 108-0075 (JP)**
• **DOI, Shouichi**
  **Tokyo 108-0075 (JP)**
• **FERNANDEZ, Melanie**
  **Tokyo 108-0075 (JP)**

(74) Representative: **MFG Patentanwälte**
**Meyer-Wildhagen Meggle-Freund**
**Gerhard PartG mbB**
**Amalienstraße 62**
**80799 München (DE)**

(54) **INFORMATION PROCESSING DEVICE, INFORMATION PROCESSING METHOD, AND SYSTEM**

(57)     There is provided an information processing device including a content analysis unit configured to analyze a group of content by setting individual pieces of content included in the group of content as nodes of a graph structure and a link between the pieces of the content as a link of the graph structure, and a learning support information generation unit configured to generate learning support information that supports learning of knowledge provided as at least a part of the group of content based on a result of the analysis.

FIG.1

**Description**

Technical Field

The present disclosure relates to an information processing device, an information processing method, and a system.

Background Art

Systems for helping users to acquire any form of content such as e-learning systems have become widespread. In an e-learning system, dedicated learning content including, for example, textbooks and exercise questions is prepared. Users progress through learning by accessing such textbooks and exercise questions provided as learning content, and reading text or answering questions, thereby acquiring the content. With regard to such a system, a technology which enables users to improve their learning efficiency by, for example, personalizing learning content according to achievement levels, aptitude, and the like of the users has been proposed. For example, Patent Literature 1 discloses a technology which enables a user to improve his or her learning efficiency by selecting and presenting proper practice questions based on correctness and incorrectness of answers of the user with respect to practice questions of the past.

Citation List

Patent Literature

Patent Literature 1:    JP 2011-232445A

Summary of Invention

Technical Problem

In an e-learning system of the past, however, knowledge that users can acquire has been limited to that included in learning content prepared in advance. On the other hand, in fields other than such an e-learning system, accumulation of knowledge recorded on electronic media continues to expand. Servers and terminal devices on networks, such as on-line encyclopedias, web sites which describe technologies of specific fields, and the like, provide many kinds of content that provide users who refer to the content with any type of knowledge. It has become common for users to use such content to acquire knowledge. However, unlike, for example, learning content of an e-learning system, information which supports learning for users such as guidance on learning and determination of an achievement level of learning has not been provided for such content.

Therefore, the present disclosure proposes a novel and improved information processing device, information processing method, and system which can support users in acquiring knowledge with regard to arbitrary content, without being limited to learning content that has been prepared in advance.

Solution to Problem

According to the present disclosure, there is provided an information processing device including a content analysis unit configured to analyze a group of content by setting individual pieces of content included in the group of content as nodes of a graph structure and a link between the pieces of the content as a link of the graph structure, and a learning support information generation unit configured to generate learning support information that supports learning of knowledge provided as at least a part of the group of content based on a result of the analysis.

According to the present disclosure, there is provided an information processing method including analyzing a group of content by setting individual pieces of content included in the group of content as nodes of a graph structure and a link between the pieces of the content as a link of the graph structure, and generating learning support information that supports learning of knowledge provided as at least a part of the group of content based on a result of the analysis.

According to the present disclosure, there is provided a system configured to include a terminal device and one or more server devices that provide a service to the terminal device, and to provide, in cooperation of the terminal device with the one or more of server devices, a function of analyzing a group of content by setting individual pieces of content included in the group of content as nodes of a graph structure and a link between the pieces of the content as a link of the graph structure, and a function of generating learning support information that supports learning of knowledge provided as at least a part of the group of content based on a result of the analysis.

By performing analysis by setting individual pieces of content included in a group of content for acquisition of knowledge as nodes of a graph structure and links between the pieces of content as links of the graph structure, it is possible to extract information, for example, a relation between pieces of content or a degree of importance of each piece of content even if they are not learning content prepared in advance. When learning support information is generated using a result of the analysis, a user can learn knowledge more efficiently.

Advantageous Effects of Invention

According to the present disclosure described above, it is possible to support users in acquiring knowledge with regard to arbitrary content, without being limited to learning content which has been prepared in advance.

Brief Description of Drawings

[FIG. 1] FIG. 1 is a diagram showing a first example of a system configuration according to an embodiment of the present disclosure.
[FIG. 2] FIG. 2 is a diagram showing a second example of the system configuration according to the embodiment of the present disclosure.
[FIG. 3] FIG. 3 is a diagram showing a third example of the system configuration according to the embodiment of the present disclosure.
[FIG. 4] FIG. 4 is a diagram showing an example of a knowledge content display screen of the embodiment of the present disclosure.
[FIG. 5] FIG. 5 is a diagram showing an example of an exercise question display screen of the embodiment of the present disclosure.
[FIG. 6] FIG. 6 is a diagram showing an example of an achievement level display screen of the embodiment of the present disclosure.
[FIG. 7] FIG. 7 is a diagram showing a configuration example of a content analysis unit and a learning support information generation unit of the embodiment of the present disclosure.
[FIG. 8] FIG. 8 is a diagram for describing a concept of clustering of a first embodiment of the present disclosure.
[FIG. 9] FIG. 9 is a diagram schematically showing a clustering process of the first embodiment of the present disclosure.
[FIG. 10] FIG. 10 is a diagram showing an example of a graph structure DB of the first embodiment of the present disclosure.
[FIG. 11] FIG. 11 is a diagram showing an example of a cluster DB of the first embodiment of the present disclosure.
[FIG. 12] FIG. 12 is a flowchart showing an example of a clustering process of the first embodiment of the present disclosure.
[FIG. 13] FIG. 13 is a flowchart showing an example of a centrality setting process of the first embodiment of the present disclosure.
[FIG. 14] FIG. 14 is a diagram schematically showing a difficulty level estimation process of a second embodiment of the present disclosure.
[FIG. 15] FIG. 15 is a diagram showing an example of a progress DB of the second embodiment of the present disclosure.
[FIG. 16] FIG. 16 is a diagram showing an example of a difficulty level DB of the second embodiment of the present disclosure.
[FIG. 17] FIG. 17 is a flowchart showing an example of a feedback acquisition process of the second embodiment of the present disclosure.
[FIG. 18] FIG. 18 is a flowchart showing an example of the difficulty level estimation process of the second embodiment of the present disclosure.
[FIG. 19] FIG. 19 is a diagram schematically showing another example of the difficulty level estimation process of the second embodiment of the present disclosure.
[FIG. 20] FIG. 20 is a flowchart showing the difficulty level estimation process of the example of FIG. 19.
[FIG. 21] FIG. 21 is a diagram schematically showing a learning target recommendation process of a third embodiment of the present disclosure.
[FIG. 22] FIG. 22 is a diagram showing an example of a clustering progress DB of the third embodiment of the present disclosure.
[FIG. 23] FIG. 23 is a flowchart showing an example of the learning target recommendation process of the third

EP 2 879 118 A1

embodiment of the present disclosure.

[FIG. 24] FIG. 24 is a diagram schematically showing a learning target recommendation process of a fourth embodiment of the present disclosure.

[FIG. 25] FIG. 25 is a diagram showing an example of a preference DB of the fourth embodiment of the present disclosure.

[FIG. 26] FIG. 26 is a diagram showing an example of a cluster preference DB of the fourth embodiment of the present disclosure.

[FIG. 27] FIG. 27 is a diagram showing an example of an action DB of the fourth embodiment of the present disclosure.

[FIG. 28] FIG. 28 is a flowchart showing an example of a feedback acquisition process of the fourth embodiment of the present disclosure.

[FIG. 29] FIG. 29 is a flowchart showing an example of the learning target recommendation process of the fourth embodiment of the present disclosure.

[FIG. 30] FIG. 30 is a diagram schematically showing an exercise question generation process of a fifth embodiment of the present disclosure.

[FIG. 31] FIG. 31 is a flowchart showing an example of the exercise question generation process of the fifth embodiment of the present disclosure.

[FIG. 32] FIG. 32 is a diagram schematically showing an allocation decision process of a sixth embodiment of the present disclosure.

[FIG. 33] FIG. 33 is a flowchart showing an example of the allocation decision process of the sixth embodiment of the present disclosure.

[FIG. 34] FIG. 34 is a flowchart showing an example of an acquisition cost computation process of the sixth embodiment of the present disclosure.

[FIG. 35] FIG. 35 is a block diagram for describing a hardware configuration of an information processing device.

Description of Embodiments

Hereinafter, preferred embodiments of the present invention will be described in detail with reference to the appended drawings. Note that, in this specification and the drawings, constituent elements that have substantially the same function and structure are denoted with the same reference signs, and repeated explanation is omitted.

Note that description will be provided in the following order.

1. System configuration
2. Example of information to be provided
3. Embodiments of analysis and information generation

3-1. First embodiment
3-2. Second embodiment
3-3. Third embodiment
3-4. Fourth embodiment
3-5. Fifth embodiment
3-6. Sixth embodiment

4. Hardware configuration
5. Supplement

(1. System configuration)

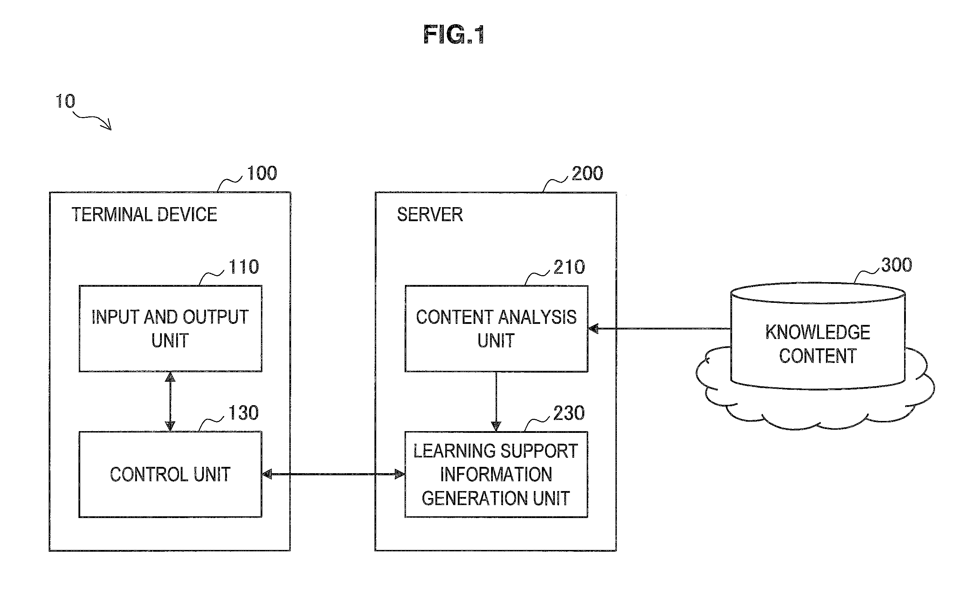

First, an example of a system configuration according to an embodiment of the present disclosure will be described with reference to FIGS. 1 to 3. FIGS. 1 to 3 respectively show first to third examples of the system configuration. Note that the examples are merely some examples of the system configuration. As is obvious from the examples, the system configuration according to the embodiment of the present disclosure can take various kinds of configurations in addition to those described.

Note that, in the embodiment of the present disclosure, a device which is described as a terminal device can be any of various devices including, for example, various kinds of personal computers (PCs), mobile telephones (including smartphones), or the like which have a function of outputting information to users and a function of receiving manipulations of users. Such a terminal device can be realized using, for example, a hardware configuration of an information processing device to be described later. The terminal device can include a functional configuration which is necessary for realizing the function of the terminal device, for example, a communication unit for communication with a server device or the like via a network if necessary, in addition to the illustrated configuration.

In addition, in the embodiment of the present disclosure, a server is connected to the terminal device through various kinds of wired or wireless networks, and realized as one or more server devices. The individual server devices can be realized using, for example, the hardware configuration of the information processing device to be described later. When a server is realized by a plurality of server devices, the server devices are connected to each other through various kinds of wired or wireless networks. Each of the server devices can include a functional configuration which is necessary for realizing the function of the server devices such as a communication unit for communicating with a terminal device, other server devices, or the like via a network if necessary, in addition to the illustrated configuration.

(First example)

FIG. 1 is a diagram showing the first example of the system configuration according to the embodiment of the present disclosure. In this example, a system 10 includes a terminal device 100 and a server 200, and the server 200 accesses knowledge content 300 provided on a network.

The terminal device 100 has an input and output unit 110 and a control unit 130. The input and output unit 110 is realized by an output device such as a display or a speaker and an input device such as a mouse, a keyboard, or a touch panel to output information to a user and receive manipulations of the user. Information output by the input and output unit 110 can include, for example, knowledge content, various kinds of learning support information for learning using knowledge content, and the like. On the other hand, a manipulation acquired by the input and output unit 110 can include, for example, a manipulation for accessing knowledge content and referring to the content, a manipulation for acquiring learning support information, a manipulation for answering exercise questions presented as one piece of the learning support information, and the like. The control unit 130 is realized by a processor such as a central processing unit (CPU), and controls overall operations of the terminal device 100 including the input and output unit 110.

The server 200 has a content analysis unit 210 and a learning support information generation unit 230. The units are realized by, for example, processors of server devices. The content analysis unit 210 accesses the knowledge content 300 provided on the network. Here, individual pieces of content constituting the knowledge content 300 are content, for example, web pages, various text files, and the like which are present on the network, and provide any type of knowledge to users. The knowledge content 300 can be treated as a set of nodes in a graph structure as will be described later. The content analysis unit 210 of the server 200 analyzes the above-mentioned graph structure. To be more specific, the content analysis unit 210 clusters the knowledge content 300. The learning support information generation unit 230 generates various kinds of learning support information for learning that uses the knowledge content 300 based on a result of the clustering of the knowledge content 300 by the content analysis unit 210.

In the system 10, the learning support information generated by the server 200 is transmitted to the terminal device 100. The terminal device 100 receives the learning support information and then outputs the information to a user. In addition, the terminal device 100 may transmit a manipulation of the user made on the knowledge content or the learning support information to the server 200 as feedback. In this case, the learning support information generation unit 230 of the server 200 may further generate learning support information based on the received feedback. In addition, the terminal device 100 may access the knowledge content 300 via the server 200, or may directly access the content via a network, rather than the server 200.

(Second example)

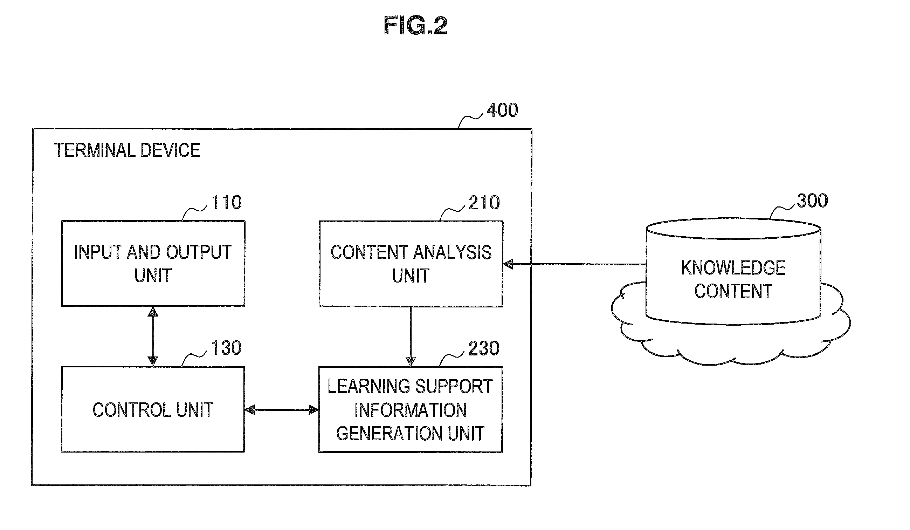

FIG. 2 is a diagram showing the second example of the system configuration according to the embodiment of the present disclosure. In this example, the system consists of a terminal device 400.

The terminal device 400 has the input and output unit 110, the control unit 130, the content analysis unit 210, and the learning support information generation unit 230. The input and output unit 110 can be realized by, for example, various kinds of output devices and input devices as described above. The control unit 130, the content analysis unit 210, and the learning support information generation unit 230 can be realized by, for example, processors. The functions of the various constituent elements are the same as those to which the same reference numerals are given in the first example described above.

As is obvious with reference to the first and the second examples, while the input and output unit which outputs information to a user and receives manipulations of the user is realized by the terminal device in the system configuration according to the embodiment of the present disclosure, it is possible to arbitrarily design other constituent elements to be realized by the terminal device, or realized by one or more server devices.

Note that, as in the second example described above, even when each of the constituent elements is realized by the terminal device, for example, various kinds of databases (DB) can be stored in a storage device of a server, or feedback of other users with respect to knowledge content or learning support information can be acquired. In other words, even when each of the constituent elements described herein is realized by the terminal device, all processes are not necessarily executed inside the single terminal device.

(Third example)

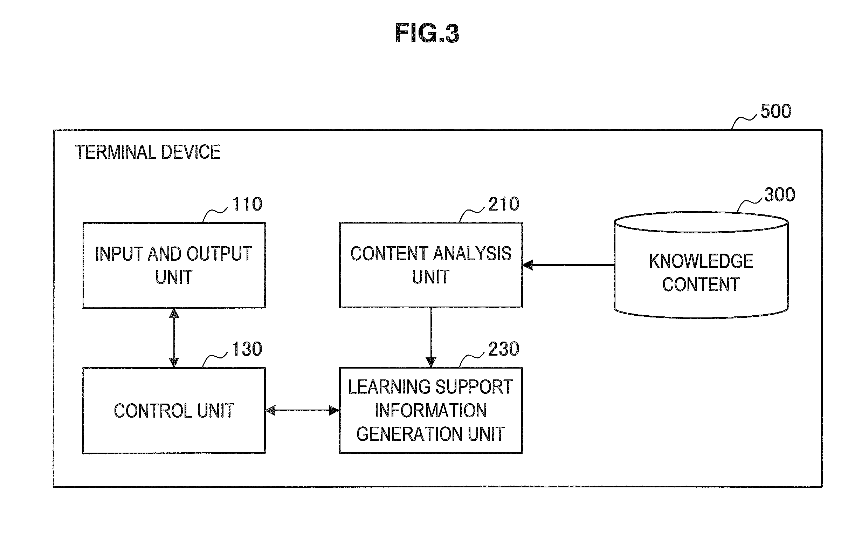

FIG. 3 is a diagram showing the third example of the system configuration according to the embodiment of the present disclosure. In this example, the system consists of a terminal device 500. Furthermore, as a difference from the two examples described above, the knowledge content 300 is present inside the terminal device 500, rather than on a network.

The terminal device 500 has the input and output unit 110, the control unit 130, the content analysis unit 210, and the learning support information generation unit 230 as the terminal device 400 of the second example described above. In this example, the knowledge content 300 is stored in, for example, a storage device of the terminal device 500. Thus, the content analysis unit 210 internally accesses and analyzes the knowledge content 300.

As is obvious with reference to the first, the second, and the third examples, the knowledge content 300 may be present on a network, and may be present inside the terminal device or a server in the embodiment of the present disclosure. In the first example described above, for example, the knowledge content 300 may be present inside the server 200 and the content analysis unit 210 may internally access the content. Alternatively, in the first example, the knowledge content 300 may be present inside the terminal device 100 and the content analysis unit 210 may access the content via a network. Furthermore, the knowledge content 300 may be present in any or all of a network, the inside of the terminal device, and the inside of the server. The content analysis unit 210 can access the knowledge content 300 by appropriately combining access via a network and internal access.

(2. Example of information to be provided)

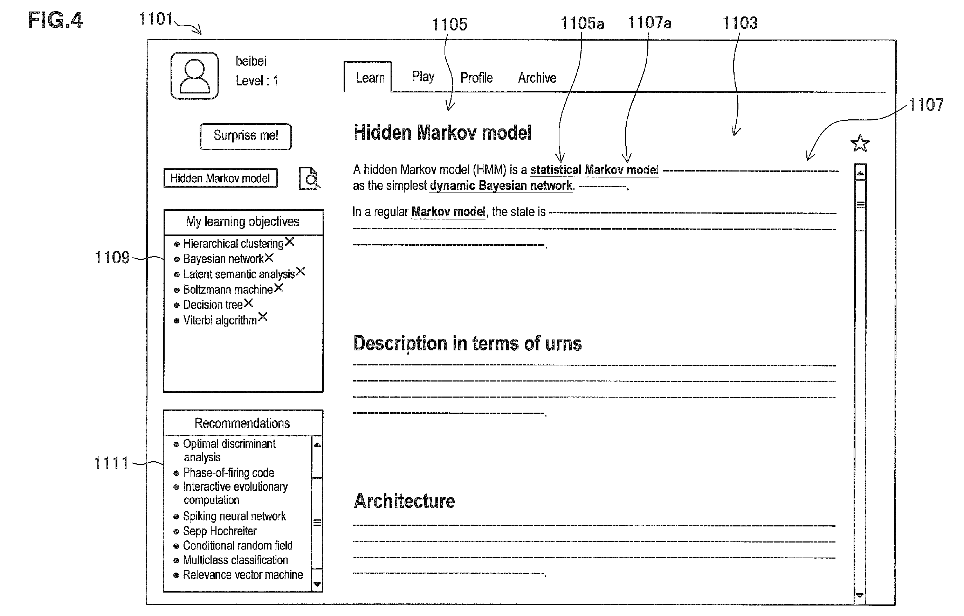

Next, an example of information to be output to a user in the embodiment of the present disclosure will be described with reference to FIGS. 4 to 6. FIGS. 4 to 6 illustrate examples of screens which can be displayed on a display when an input and output unit of a terminal device includes the display. Note that the examples are merely some examples of screens that can be displayed, and knowledge content and learning support information to be described later can be displayed as various screens other than the aforementioned screens. In addition, the input and output unit of the terminal device may not necessarily be realized as a display, and may be realized as, for example, a speaker. In this case, knowledge content and learning support information may be output as sounds.

(Example of a knowledge content display screen)

FIG. 4 is a diagram showing an example of a knowledge content display screen of the embodiment of the present disclosure. The knowledge content display screen 1101 is a screen that is displayed when a user accesses knowledge content using a terminal device. The knowledge content display screen 1101 includes, for example, a knowledge content display 1103, and the knowledge content display 1103 includes a title 1105 and text 1107.

In the illustrated example, a web page is displayed as the knowledge content display 1103. On the web page, a string of letters "Hidden Markov Model" is displayed as the title 1105. "Hidden Markov Model" is one of statistical models, and the web page displayed herein is a page for describing the hidden Markov model. An object of an exercise question generated in the embodiment of the present disclosure is of course not limited to statistical models. The text 1107 is displayed on the page for the description. Note that not only text but also, for example, images, dynamic images, graphs, and the like may be displayed for description as well. As reading of this page progresses, knowledge about the hidden Markov model can be acquired.

Here, the displayed text 1107 includes links 1107a. When any link 1107a is selected through a user manipulation, the web page displayed as the knowledge content display 1103 transitions to another web page indicated by the link 1107a. In the illustrated example, the links 1107a are set on the terms of "statistical," "Markov model," and "dynamic Bayesian network." The links can bring about a transition to other web pages on which the other terms appearing in description of "Hidden Markov Model" are further described.

Knowledge content referred to in the present specification is content for helping users acquire any knowledge as the web page of the illustrated example. The content is files recorded on, for example, an electronic medium, and can present various kinds of information to users in the form of text, images, dynamic images, graphs, and the like. Such content is disposed on, for example, web pages, and referred to from a terminal device via a network. In addition, knowledge content may be stored in a storage device on a terminal device side and a removable recording medium, and read and referred to from them.

In addition, as the links 1107a of the illustrated example, a link to other knowledge content is set in the knowledge content. In other words, it is possible to set links among a plurality of pieces of knowledge content such that a certain piece of content refers to another piece of content, and the other piece of content further refers to still another piece of content. Such a link between pieces of content is not limited to a link using linked text as the link 1107a, and an arbitrary icon that brings about a transition to another piece of content may be used. In addition, in a case of knowledge content which is stratified into, for example, broad classification, intermediate classification, and narrow classification, a transition to another piece of content may be possible by giving an instruction on a predetermined direction such as upward-downward, or left-right to the terminal device through a manipulation. In this case, even when an icon or the like for link is not displayed in content itself, if content to which a transition is made by a predetermined manipulation is decided in advance, it can be said that link between pieces of content is set.

Furthermore, the knowledge content display screen 1101 can include information, a manipulation icon, and the like for supporting learning through knowledge content such as a target content display 1109 and a recommended content display 1111. Among these, the target content display 1109 displays titles of other pieces of knowledge content which a user currently learns or sets as learning targets. The recommended content display 1111 displays titles of the knowledge content recommended to the user according to information generated by the learning support information generation unit 230. Note that details of the generation of the learning support information by the learning support information generation unit 230 such as recommendation of the knowledge content will be described later.

(Example of an exercise question display screen)

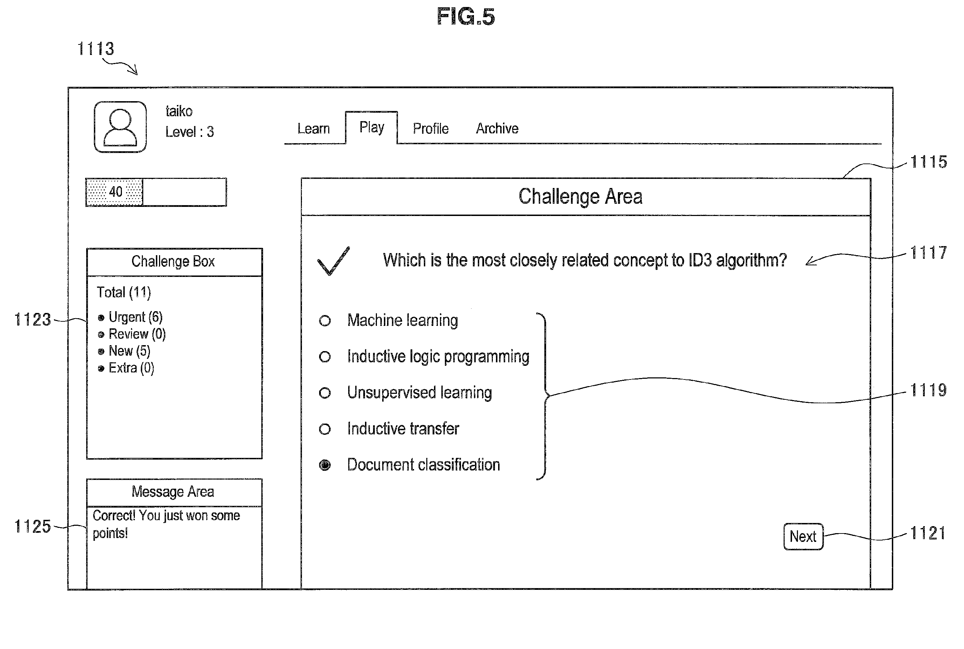

FIG. 5 is a diagram showing an example of an exercise question display screen of the embodiment of the present disclosure. The exercise question display screen 1113 is a screen displayed when an exercise question is presented to a user to check, for example, an achievement level of learning using the knowledge content. The exercise question may be displayed through, for example, a user manipulation, or may be automatically displayed when the user refers to the knowledge content and then finishes a certain amount of learning (for example, an amount of one page of the web page in the example of FIG. 4, or the like). The exercise question display screen 1113 includes, for example, a question display 1115, and the question display 1115 includes a question sentence 1117, options 1119, and an answer button 1121.

In the illustrated example, an exercise question with regard to "ID3 algorithm" provided with 5 options is displayed using the question sentence 1117 and the options 1119. "ID3 algorithm" is one of algorithms that are used in machine learning, and the exercise question displayed here is a question for checking understanding of a user with regard to the ID3 algorithm. Of course, an object of the exercise question generated in the embodiment of the present disclosure is not limited to an algorithm that is used in machine learning. In the options 1119, 5 terms which have a certain degree of association with the ID3 algorithm are displayed. These terms can include one term that has the highest association with the term to be tested (ID3 algorithm) and the remaining terms that have a lower association therewith than the aforementioned term. When the user selects the term having the highest association therewith through a manipulation and then presses the answer button 1121, the answer of the user is determined to be correct. Note that the number of options is not limited to five, and the number of answers is not limited to one either. Such an exercise question can also be generated by the learning support information generation unit 230 as one piece of learning support information as will be described later.

Furthermore, the exercise question display screen 1113 can include a question selection display 1123 and a message area 1125. Among these, the question selection display 1123 displays recommended exercise questions to the user according to information generated by the learning support information generation unit 230. The message area 1125 displays various messages relating to learning using the knowledge content. The messages may be displayed according to, for example, information generated by the learning support information generation unit 230. Note that details of the information generated by the learning support information generation unit 230 will be described later.

(Example of achievement level display screen)

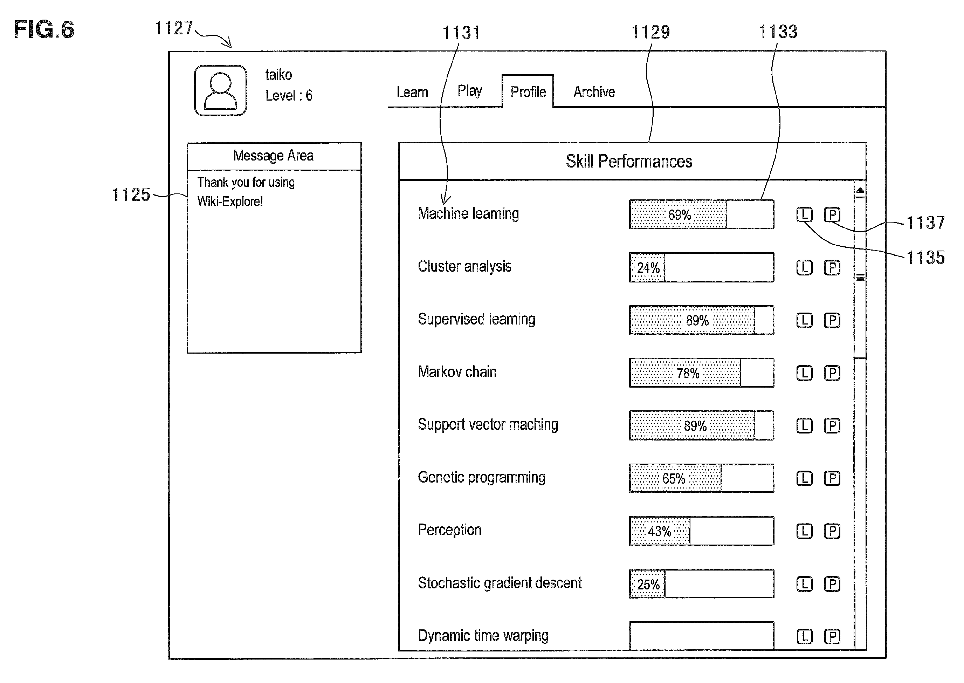

FIG. 6 is a diagram showing an example of an achievement level display screen of the embodiment of the present disclosure. The achievement level display screen 1127 is a screen that displays an achievement level of learning that uses the knowledge content. The achievement level may be displayed through, for example, a user manipulation, or may be automatically displayed when the user refers to the knowledge content and then finishes a certain amount of learning (for example, an amount of one page of the web page in the example of FIG. 4, or the like). The achievement level display screen 1127 includes, for example, an achievement level display 1129, and the achievement level display 1129 includes labels 1131, achievement levels 1133, learning buttons 1135, and exercise buttons 1137. Furthermore, the achievement level display screen 1127 may include the same message area 1125 as that of the example of FIG. 5 described above.

In the illustrated example, the achievement levels 1133 of the labels 1131 such as "machine learning" and "cluster analysis" with regard to learning of the user are displayed. The labels 1131 can correspond to the titles of clusters generated as a result of clustering of the knowledge content by, for example, the content analysis unit 210. In this case, the achievement levels 1133 can indicate a degree of achievement in learning of the user with regard to the knowledge content that corresponds to nodes classified into each of clusters. Note that the title of a cluster may be the title of a piece of content having the highest centrality to be described later out of, for example, the knowledge content classified into clusters.

In the same manner, the learning buttons 1135 and the exercise buttons 1137 can be displayed for each cluster into which the knowledge content is classified. When any learning button 1135 is pressed, for example, knowledge content that corresponds to a node recommended to the user among the nodes which are classified into the cluster may be displayed as, for example, the knowledge content display screen 1101 shown in FIG. 4 described above according to the information generated by the learning support information generation unit 230. In addition, when any exercise button 1137 is pressed, an exercise question recommended to the user among exercise questions generated with regard to the nodes which are classified into the cluster may be displayed as, for example, the exercise question display screen 1113 shown in FIG. 5 described above according to the information generated by the learning support information generation unit 230.

As described above, information that supports acquisition of knowledge of the user with regard to arbitrary knowledge content is provided according to the functions of the content analysis unit 210 and the learning support information generation unit 230 in the embodiment of the present disclosure. Accordingly, even when the user acquires knowledge using content that is not learning content prepared in advance, he or she can efficiently progress through acquisition of the knowledge by being provided with a recommendation of the content to be acquired and an exercise question.

Hereinbelow, an example of detailed configurations of the content analysis unit 210 and the learning support information generation unit 230 for providing the aforementioned information to a user will be further described.

(3. Embodiments of analysis and information generation)

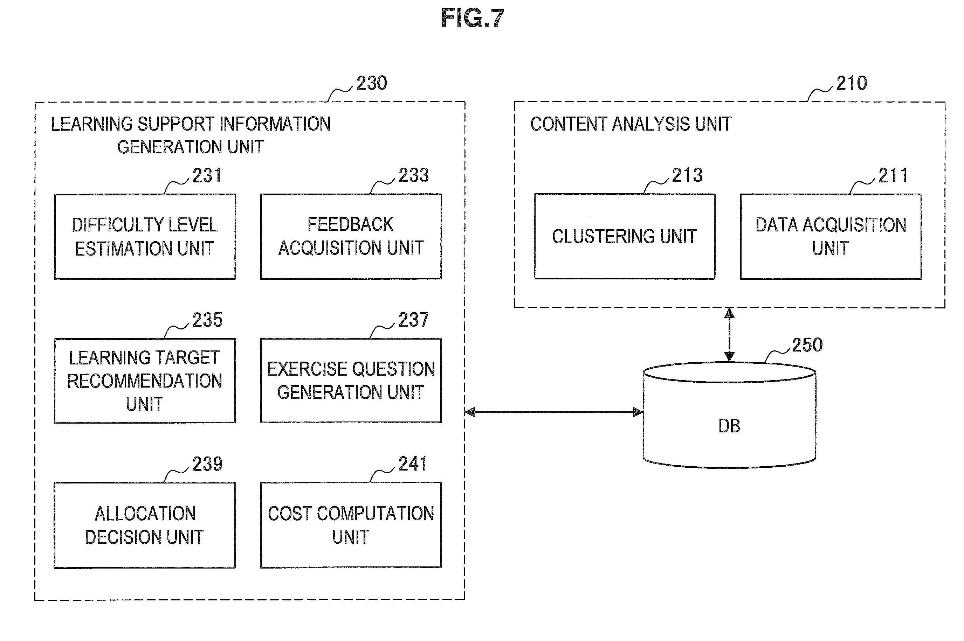

Hereinafter, the examples of the configurations of the content analysis unit and the learning support information generation unit according to embodiments of the present disclosure will be described with reference to FIGS. 7 to 34. First, an overall configuration will be described with reference to FIG. 7.

FIG. 7 is a diagram showing a configuration example of the content analysis unit and the learning support information generation unit of the embodiment of the present disclosure. As described above, the content analysis unit 210 and the learning support information generation unit 230 are constituent elements realized by a server or a terminal device in the system according to the embodiment of the present disclosure. As described using FIGS. 1 to 3, the content analysis unit 210 analyzes the graph structure of the knowledge content 300 present on the network, or the the inside of the server or the terminal device and clusters the knowledge content 300. The learning support information generation unit 230 generates various kinds of learning support information based on a result of the clustering, and then provides the information to the control unit of the terminal device. In addition, the learning support information generation unit 230 can acquire a manipulation of the user with regard to the knowledge content or learning support information from the control unit of the terminal device as feedback, and further generate learning support information based on the feedback.

Here, the content analysis unit 210 and the learning support information generation unit 230 access a DB 250, and record, read, or update data if necessary. Each of the content analysis unit 210, the learning support information generation unit 230, and the DB 250 may be realized by the same device, or by a different device. Hereinbelow, internal constituent elements of the content analysis unit 210 and the learning support information generation unit 230 will be described, however, each of the constituent elements can also be realized by different devices.

The content analysis unit 210 includes a data acquisition unit 211 and a clustering unit 213 as illustrated. The data acquisition unit 211 accesses the knowledge content 300 and acquires each piece of the knowledge content, i.e., information relating to nodes of a graph structure. The data acquisition unit 211 stores the acquired information in the DB 250. The clustering unit 213 executes clustering on the graph structure based on the information acquired by the data acquisition unit 211. Accordingly, clusters into which each piece of the knowledge content is classified are specified. The clustering unit 213 stores the result of the clustering in the DB 250.

On the other hand, the learning support information generation unit 230 includes a difficulty level estimation unit 231, a feedback acquisition unit 233, a learning target recommendation unit 235, an exercise question generation unit 237, an allocation decision unit 239, and a cost computation unit 241. The constituent elements generate learning support information based on the result of the clustering of the knowledge content stored in the DB 250 individually or in cooperation with each other. The learning support information is information that supports learning of knowledge provided with at least a part of a knowledge content group. Each of the constituent elements may store a result of a process in the DB 250. In addition, each of the constituent elements may generate learning support information based on a result of a process that is obtained by another constituent element and stored in the DB 250.

Hereinbelow, first, an example of clustering of the knowledge content by each of the constituent elements of the content analysis unit 210 will be described as a first embodiment of the present disclosure, and then examples of generation of various kinds of learning support information by each of the constituent elements of the learning support information generation unit 230 will be described as second to sixth embodiments of the present disclosure. Note that the learning support information generation unit 230 may only include each of the constituent elements that is necessary for any case of generation of learning support information to be described below. In other words, the learning support information generation unit 230 may not necessarily include all of the difficulty level estimation unit 231 to the cost computation unit 241, and may only include some of them.

(3-1. First embodiment)

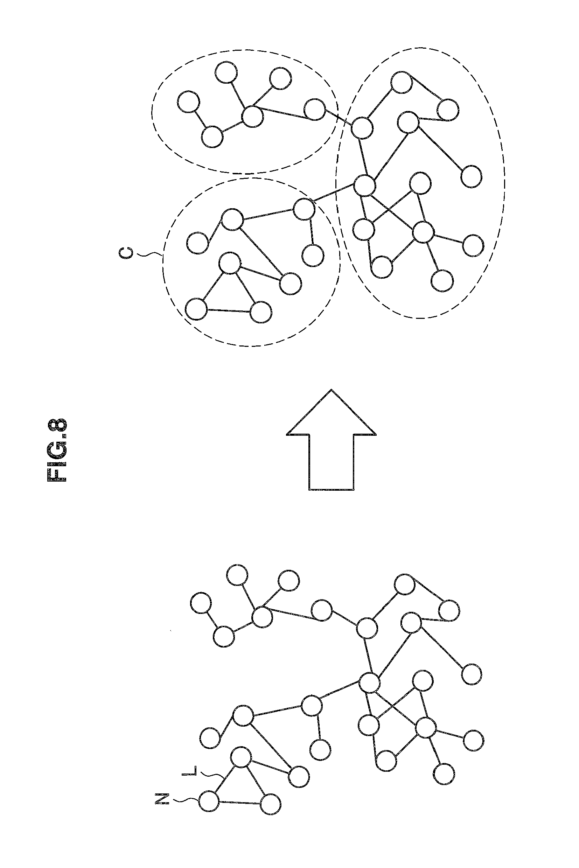

Next, the first embodiment of the present disclosure will be described with reference to FIGS. 8 to 13. In the present embodiment, a clustering process is executed.

FIG. 8 is a diagram for describing a concept of clustering of the first embodiment of the present disclosure. As described above, it is possible to set a link between a plurality of pieces of knowledge content. In the first embodiment of the present disclosure, the clustering unit 213 of the content analysis unit 210 learns such a set of knowledge content as a graph structure, and executes clustering. In other words, the clustering unit 213 sets each of pieces of knowledge content as a node N of the graph structure as illustrated, sets a link between the pieces of the knowledge content as a link L between nodes, then executes clustering on the set of the knowledge content, and thereby classifies each of the nodes N into clusters C.

Note that, for the clustering executed by the clustering unit 213, for example, various kinds of techniques such as voltage clustering or spectral clustering can be used. Since the techniques are already know as clustering techniques with regard to a graph structure, detailed description thereof will be omitted. Note that an example of the voltage clustering is disclosed in, for example, the specification of US patent application publication No. 2006/0112105, or the like. In addition, an example of the spectral clustering is disclosed in, for example, JP 2011-186780A, or the like. It is possible to use various kinds of known techniques for clustering, without being limited to the above techniques.

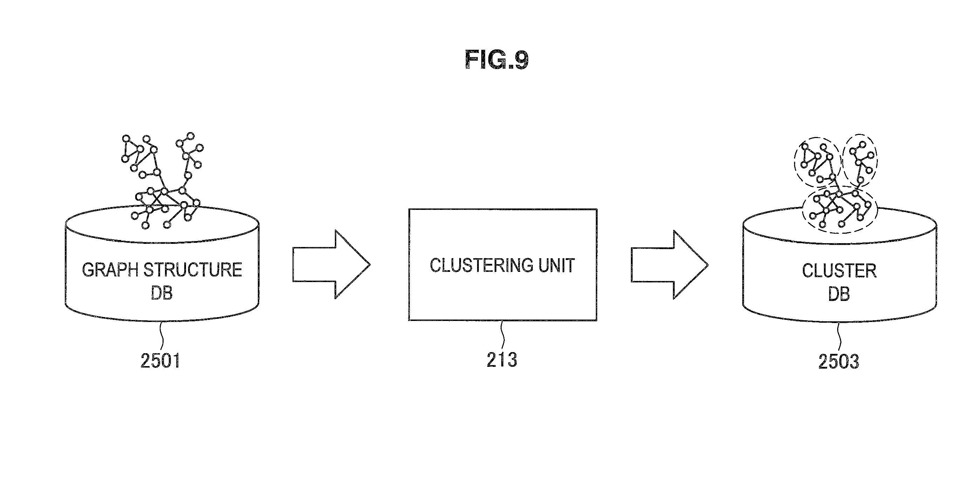

FIG. 9 is a diagram schematically showing a clustering process of the first embodiment of the present disclosure. In the first embodiment of the present disclosure, the data acquisition unit 211 accesses the knowledge content 300 and stores data indicating a graph structure thereof in a graph structure DB 2501. The clustering unit 213 acquires the data from the graph structure DB 2501, and executes the clustering described above. At this time, the clustering unit 213 may not only classify each of the nodes of the graph structure into clusters but also compute centrality of each node in the graph structure. Note that details of the centrality will be described later. The clustering unit 213 stores the result of the clustering in a cluster DB 2503. Note that the centrality can be computed separately from the result of the clustering as will be described later. Thus, the clustering unit 213 may also compute the centrality without performing clustering. In this case, the computed centrality may be stored in, for example, the graph structure DB 2501, or the like.

Note that DBs that will be described below are assumed to be included in, for example, the DB 250 described above as the graph structure DB 2501 and the cluster DB 2503, and to be able to be referred to by the learning support information generation unit 230 if necessary.

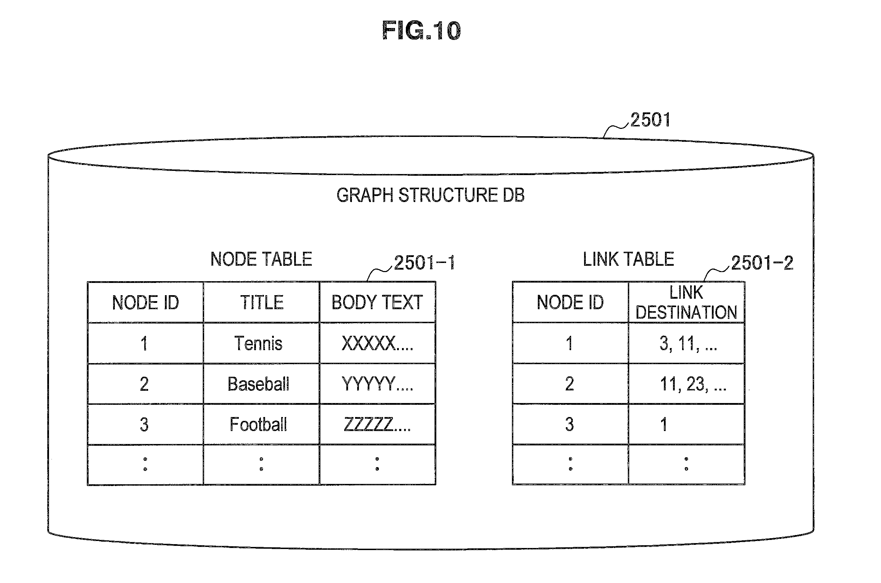

FIG. 10 is a diagram showing an example of the graph structure DB of the first embodiment of the present disclosure. The graph structure DB 2501 can include, for example, a node table 2501-1 and a link table 2501-2.

The node table 2501-1 is a table in which information of the nodes of the graph structure of the knowledge content is retained, and includes, for example, node ID, title, body text, and the like. "Node ID" represents IDs that are given to individual pieces of content included in the knowledge content 300 by, for example, the data acquisition unit 211. In other words, an individual piece of the knowledge content is treated as one node in the node table 2501-1. Note that the term "node" may refer to an individual piece of knowledge content in description provided below.

"Title" represents the title of each piece of content, which can be, for example, the string of letters displayed as the title 1105 on the knowledge content display screen 1101 exemplified in FIG. 4. "Body text" represents the body text of each piece of content, which can be, for example, a string of letters or the like displayed as the text 1107 on the knowledge content display screen 1101 described above. As described with respect to the knowledge content display screen 1101, body text is not limited to text, and may include, for example, an image, a dynamic image, a graph, and the like. The item of the "body text" in the node table 2501-1 may be data of such text or the like which is stored as it is, or may indicate a storage location of a file which includes the item.

The link table 2501-2 is a table that retains information of links in the graph structure of the knowledge content, and includes items of, for example, node ID and link destination, and the like. "Node ID" represents, for example, the same item as the node ID in the node table 2501-1, and IDs for identifying each node. "Link destination" represents node IDs of other nodes to which each node is linked. When the row of the node ID "1" is referred to, for example, it is found that the node is linked to a node with a node ID "3," a node with a node ID "11," and the like.

A link between knowledge content can be realized as an element that regulates a transition to another piece of content through a predetermined manipulation made in the middle of reference of content, for example, like the link 1107a on the knowledge content display screen 1101 exemplified in FIG. 4. The data acquisition unit 211 acquires information of the link table 2501-2 by scanning a file of the knowledge content and thereby detecting such an element. As an example, when the knowledge content is an html file, the data acquisition unit 211 detects a tag for a link such as "<a href= "..."> ... </a>" in a file, and then specifies a file of another piece of knowledge content designated by the tag as a link destination.

Note that a configuration of the graph structure DB 2501 is not limited to the illustrated example, and an arbitrary configuration which can describe a graph structure can be employed.

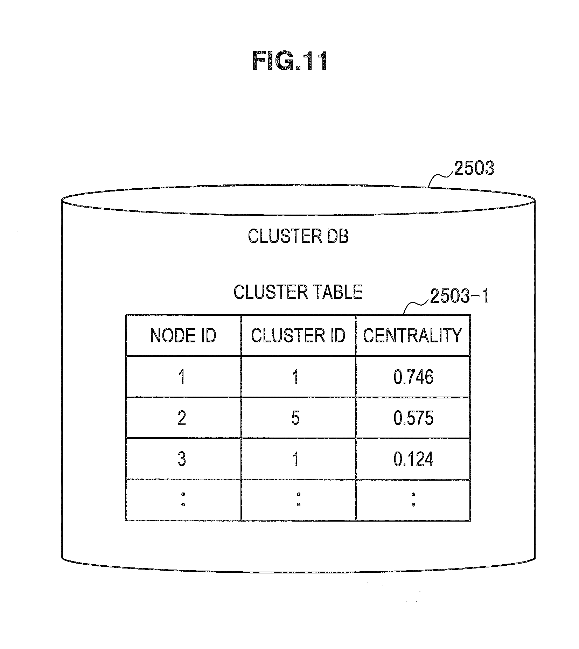

FIG. 11 is a diagram showing an example of the cluster DB of the first embodiment of the present disclosure. The cluster DB 2503 can include, for example, a cluster table 2503-1.

The cluster table 2503-1 is a table which retains information of clusters set for the graph structure of the knowledge content, and includes items of, for example, node ID, cluster ID, centrality, and the like. "Node ID" represents the same item as the node ID of the graph structure DB 2501, and IDs for identifying each node. "Cluster ID" represents IDs for identifying clusters obtained by classifying each node as the result of clustering performed by the clustering unit 213. It is found that, in the illustrated example, the nodes with the node ID "1" and the node ID "3" are classified into the cluster with cluster ID "1" and the node with the node ID "2" is classified into the cluster with cluster ID "5." "Centrality" represents centrality of each node in the graph structure. Centrality will be further described below.

Centrality is a value which indicates to what extent each of the nodes is a central node in the graph structure. Roughly speaking, a node that is linked to a larger number of other nodes is determined as a node having higher centrality in the present embodiment. As a method of calculating such centrality, for example, the following formula 1 or formula 2 can be used. Note that, in formula 1 and formula 2, CV indicates centrality, $k_{in}$ indicates the number of incoming links, in other words, the number of links to a target node from other nodes, and $k_{out}$ indicates the number of outgoing links, in other words, the number of links to other nodes from the target node.

[Math 1]

$$CV = \frac{k_{in}}{k_{out} + 1} \quad \cdot \cdot \cdot \text{(Formula 1)}$$

[Math 2]

$$CV = \frac{k_{in}}{k_{in} + k_{out}}\sqrt{k_{in}} + \frac{k_{out}}{k_{in} + k_{out}}\sqrt{k_{out}} \quad \cdot \cdot \cdot \text{(Formula 2)}$$

Note that the method of calculating centrality is not limited to the above-described example, and any of various kinds of calculation values which indicate a degree of centrality of each node in a graph structure can be employed as centrality.

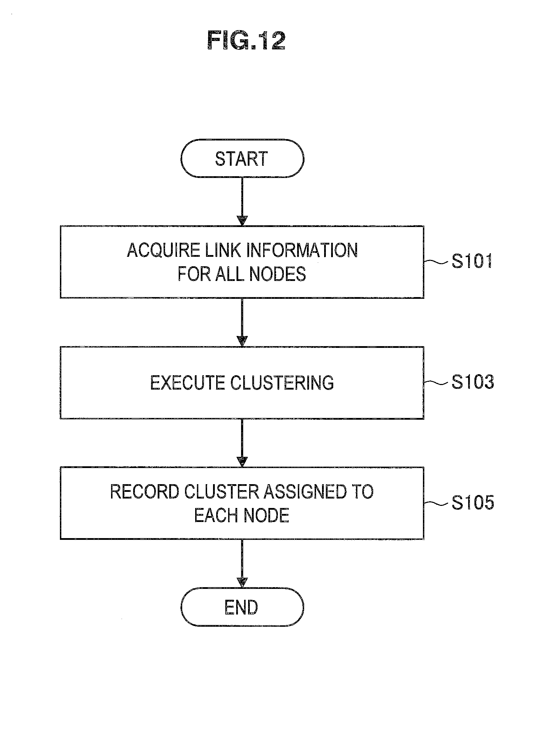

FIG. 12 is a flowchart showing an example of a clustering process of the first embodiment of the present disclosure. The drawing shows the process in which, after the data acquisition unit 211 acquires data of the graph structure of the knowledge content, the clustering unit 213 executes clustering on the graph structure.

First, the clustering unit 213 accesses the graph structure DB 2501 and then acquires link information for all nodes from the link table 2501-1 (Step S101). The clustering unit 213 thereby ascertains the entire picture of the graph structure constituted by nodes N and links L shown in FIG. 8.

Next, the clustering unit 213 executes clustering based on the acquired link information (Step S103). Accordingly, the nodes of the knowledge content are each classified into clusters C as shown in FIG. 8.

Next, the clustering unit 213 records the clusters assigned to each of the nodes through the clustering (Step S105). Specifically, the clustering unit 213 accesses the cluster DB 2503 and then records cluster information of all nodes in the cluster table 2503-1.

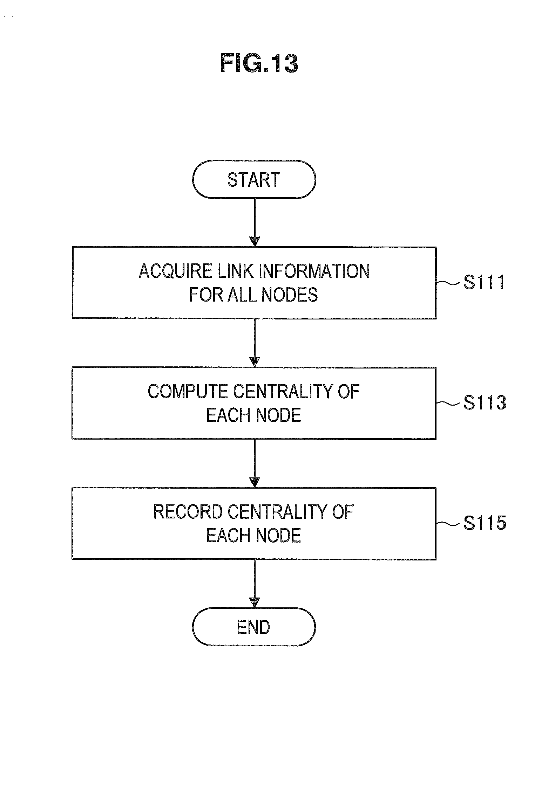

FIG. 13 is a flowchart showing an example of a centrality setting process of the first embodiment of the present disclosure. The drawing shows the process in which the clustering unit 213 sets centrality of each node in the graph structure.

First, the clustering unit 213 accesses the graph structure DB 2501 and then acquires link information for all nodes from the link table 2501-1 (Step S111). The clustering unit 213 can thereby determine to which node each node is linked.

Next, the clustering unit 213 computes centrality of each node based on the acquired information (Step S113). As described above, centrality is a value which indicates a degree of centrality of a node in a graph structure. In this example, the clustering unit 213 computes centrality based on the number of links present between each node and other nodes.

Next, the clustering unit 213 records the centrality computed for each node (Step S115). Specifically, the clustering unit 213 accesses the cluster DB 2503 and then records centrality of all nodes in the cluster table 2503-1.

In the first embodiment of the present disclosure, the graph structure of the knowledge content is clustered and centrality of each of the nodes is computed through the processes as above. The result of the clustering and the centrality can be used in processes for generating various kinds of learning support information to be described below.

(3-2. Second embodiment)

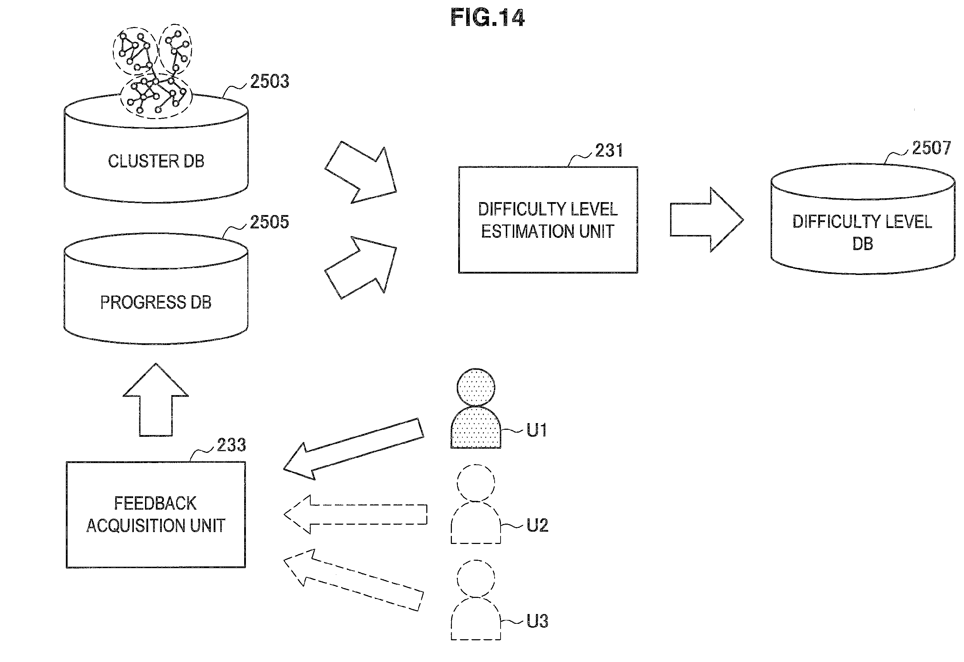

Next, a second embodiment of the present disclosure will be described with reference to FIGS. 14 to 20. In the present embodiment, a difficulty level estimation process is executed using the result of the clustering process described as the first embodiment.

FIG. 14 is a diagram schematically showing the difficulty level estimation process of the second embodiment of the present disclosure. In the second embodiment of the present disclosure, a difficulty level estimation unit 231 estimates a difficulty level of each node based on data acquired from the cluster DB 2503 and a progress DB 2505 in which progress in learning of the user for each node is recorded, and stores results thereof in a difficulty level DB 2507. Data of the progress DB 2505 is recorded by the feedback acquisition unit 233. The feedback acquisition unit 233 acquires a manipulation performed by users U on knowledge content or learning support information as feedback.

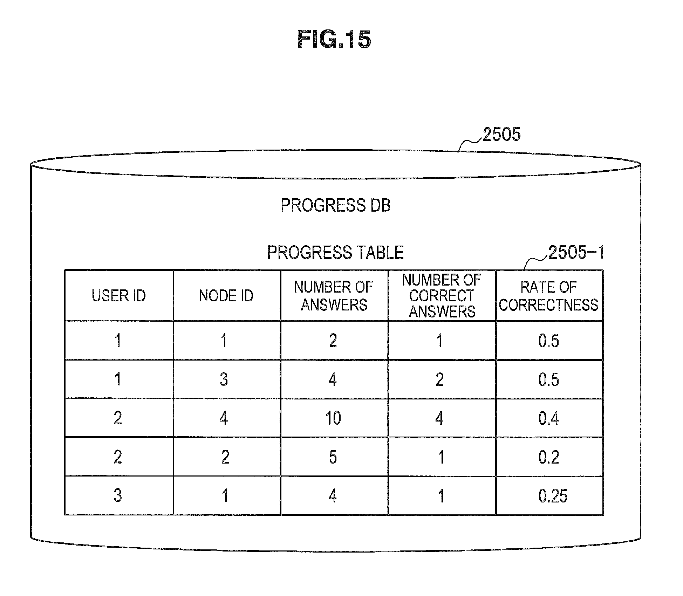

FIG. 15 is a diagram showing an example of the progress DB of the second embodiment of the present disclosure. The progress DB 2505 can include, for example, a progress table 2505-1.

The progress table 2505-1 is a table on which progress in learning of users with regard to each node is recorded, and includes items of, for example, user ID, node ID, the number of answers, the number of correct answers, rate of correctness, and the like. "User ID" represents IDs given to individual users whose feedback is acquired by the feedback acquisition unit 233. In the example of FIG. 14, when feedback is acquired from each of a plurality of users U1 to U3, for example, it is desirable to identify each of the users using their user IDs, or the like. On the other hand, when feedback is acquired from only one single user U1, a configuration in which the item of user ID is not provided in the progress table 2505-1 is also possible. "Node ID" is the same item as the node ID in other DBs described above, and represents IDs for identifying each node. In other words, data is recorded for each association of a user and a node in the progress table 2505-1.

"The number of answers" is the number of times a user gives an answer to an exercise question presented for each node. The exercise question mentioned herein may be a question generated as one piece of learning support information as will be described later, or may be a question that is separately prepared. "The number of correct answers" is the number of times a user gives a correct answer to the exercise question. "Rate of correctness" is a rate at which a user gives a correct answer among his or her answers to exercise questions, in other words, the number of correct answers/the number of answers. Note that the rate of correctness may be calculated in advance and then included in the progress table 2505-1 as in the illustrated example in order to lower a calculation load in later processes, or may be computed using the number of answers and the number of correct answers in each computation time, without being included in the progress table 2505-1.

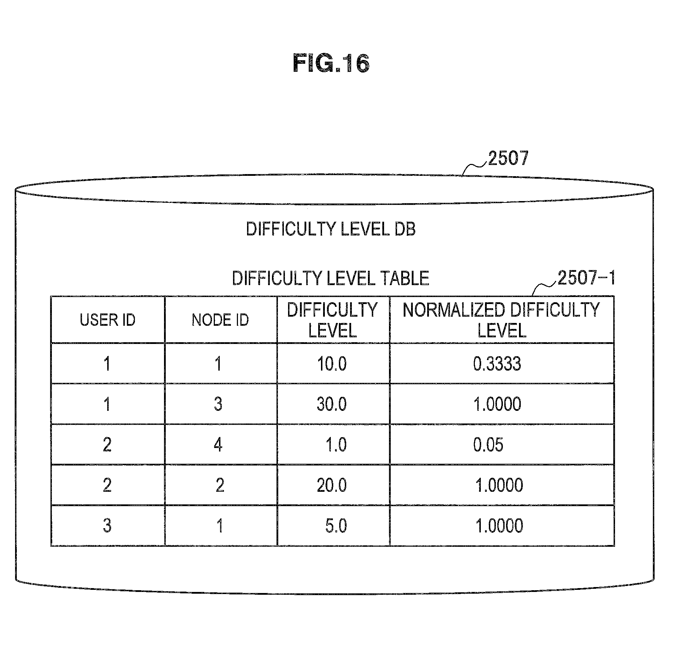

FIG. 16 is a diagram showing an example of the difficulty level DB of the second embodiment of the present disclosure. The difficulty level DB 2507 can include, for example, a difficulty level table 2507-1.

The difficulty level table 2507-1 is a table on which difficulty levels of each node are recorded, and includes items of, for example, user ID, node ID, difficulty level, normalized difficulty level, and the like. "User ID" is the same item as the user ID of the progress DB 2505, representing IDs for identifying each user. When estimation of a difficulty level is executed targeting a single user or without specifying a user, a configuration in which the item of user ID is not provided in the difficulty level table 2507-1 is also possible. "Node ID" is the same item as the node ID of other DBs described above, representing IDs for identifying each node. In other words, also in the difficulty level table 2507-1, data is recorded for each association of a user and a node.

"Difficulty level" is a difficulty level of each node which is computed in a process of the difficulty level estimation unit 231 to be described later. "Normalized difficulty level" is a value obtained by normalizing a difficulty level of each node by a maximum value of each user. Note that, as the rate of correctness in the progress table 2505-1, the normalized difficulty level may also be calculated in advance and included in the difficulty level table 2507-1 as shown in the illustrated example, or may be computed from a difficulty level in each computation time, rather than being included in the difficulty level table 2507-1. A normalized item in each DB to be exemplified in description below may likewise be included in a table or may be computed in each computation time rather than being included in the table.

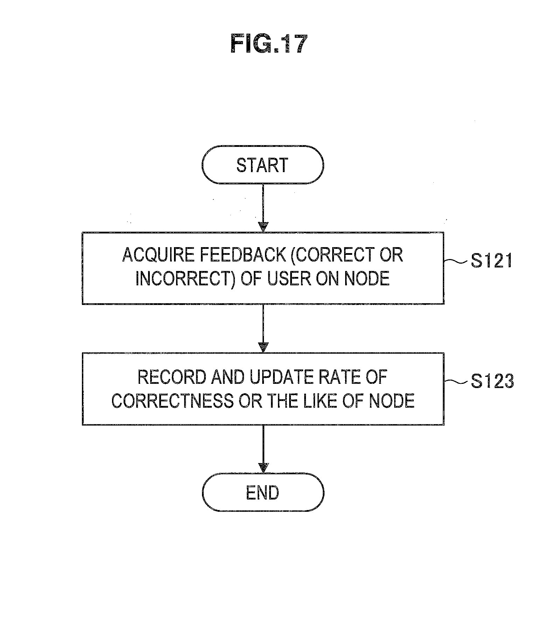

FIG. 17 is a flowchart showing an example of a feedback acquisition process of the second embodiment of the present disclosure. The drawing shows a process in which data corresponding to feedback acquired by the feedback acquisition unit 233 from users is recorded in the progress DB 2505.

First, the feedback acquisition unit 233 acquires feedback of the users with respect to the nodes (Step S121). The feedback mentioned herein is answers of the users to exercise question with respect to the nodes, and information that there is an answer and whether the answer is correct or incorrect is acquired.

Next, the feedback acquisition unit 233 records and updates information of the rate of correctness or the like of each node and the like based on the acquired feedback (Step S123). Specifically, the feedback acquisition unit 233 accesses the progress DB 2505 and when data corresponding to an association of a target user and a node has already been recorded, the items of the number of answers, the number of correct answers, and the rate of correctness are updated. When the data has not yet been recorded, new data is recorded.

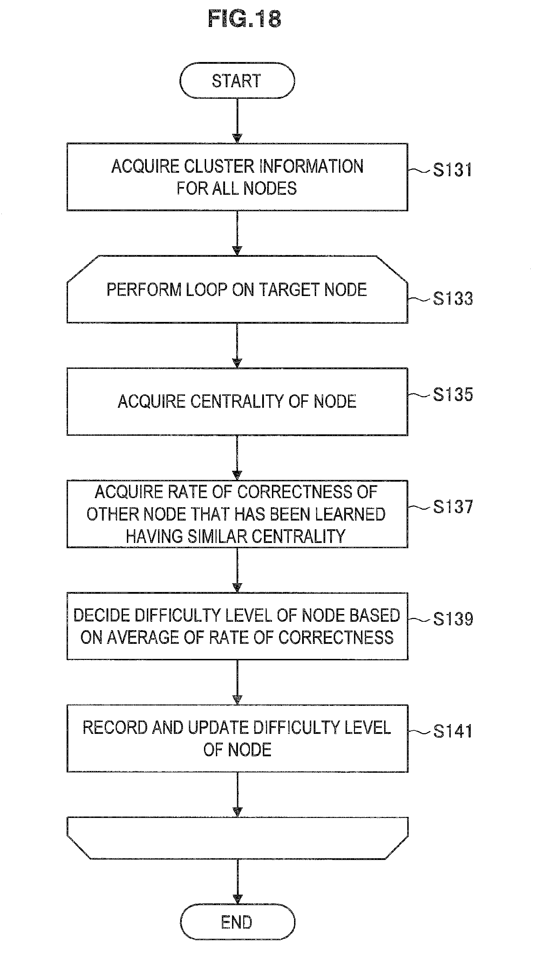

FIG. 18 is a flowchart showing an example of the difficulty level estimation process of the second embodiment of the present disclosure. The drawing shows a process in which a result of the feedback acquisition process shown in FIG. 17 is received and the difficulty level estimation unit 231 estimates a difficulty level of each node.

First, the difficulty level estimation unit 231 accesses the cluster DB 2503, and acquires cluster information for all nodes from the cluster table 2503-1 (Step S131). In the illustrated example, centrality of each node is used in the difficulty level estimation process.

Then, the difficulty level estimation unit 231 executes a loop process for each node with respect to nodes which are targets of the difficulty level estimation (Step S133). The nodes which are targets of the difficulty level estimation may be all of the nodes, or some nodes designated through a user manipulation or the like. In addition, the number of target nodes may be one, and in this case, the process does not loop.

In the process for each node, first, the difficulty level estimation unit 231 acquires centrality of the node (Step S135). Then, the difficulty level estimation unit 231 accesses the progress DB 2505 to extract nodes among nodes which a difficulty level estimation target user has learned, of which centrality is similar to the centrality acquired in Step S135, and then acquires data of the rates of correctness of the nodes (Step S137). Note that the centrality can be extracted from the cluster information acquired in Step S131 described above. Having similar centrality may mean that, for example, the difference in centrality is within a predetermined threshold value.

Next, the difficulty level estimation unit 231 decides a difficulty level of the node based on the average of the rates of correctness acquired in Step S137 (Step S139). Using the average of the rates of correctness described above as $T_{avg}$, for example, the difficulty level may be defined as $1-T_{avg}$. In other words, a difficulty level is decided under the definition that a higher rate of correctness corresponds to a lower difficulty level, and a lower rate of correctness corresponds to a higher difficulty level. The difficulty level estimation unit 231 accesses the difficulty level DB 2507 to record or update the decided difficulty level (Step S141).

Also, for a node which a user has not yet learned, a difficulty level thereof when the user learns the node can be estimated through the process described above. By providing information of the difficulty level to the user in advance or recommending a node which the user will learn based on the difficulty level, for example, it is possible to support the user in properly selecting a node to be learned next.

Note that the process described above can be executed when there are the data of the cluster DB 2503 and the data of the progress DB 2505 that is based on feedback from a user who is a target of the difficulty level estimation. In other words, the estimation of a difficulty level can be completed in a process for a single user (only for the user U1 in the example of FIG. 14). Thus, the progress DB 2505 and the difficulty level table 2507 may not necessarily include data with regard to a plurality of users.

(Modified example 1 of difficulty level estimation)

Estimation of a difficulty level of each node of knowledge content can be executed through various processes, in addition to the above-described example.

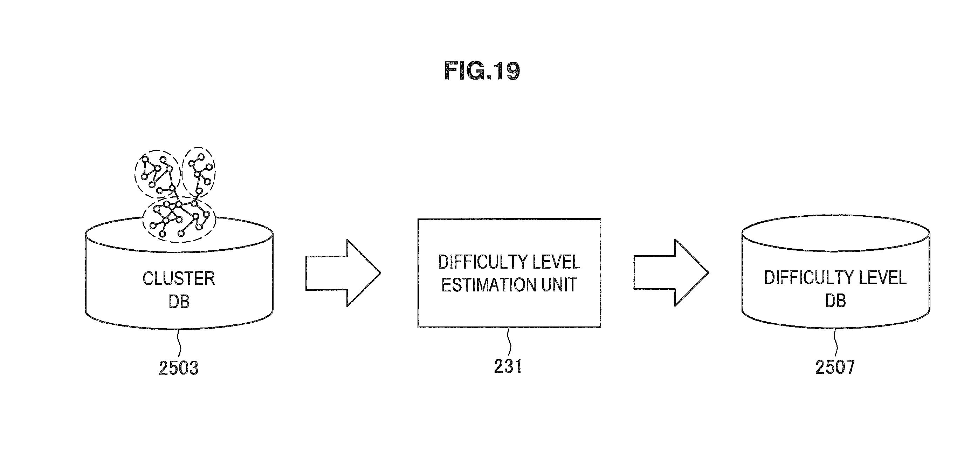

FIG. 19 is a diagram schematically showing another example of the difficulty level estimation process of the second embodiment of the present disclosure. In this example, the difficulty level estimation unit 231 estimates a difficulty level of each node based on data acquired from the cluster DB 2503, and stores a result in the difficulty level DB 2507. In the illustrated example, a difficulty level is estimated based on centrality of each node. Thus, feedback from a user is not necessary for the estimation of a difficulty level.

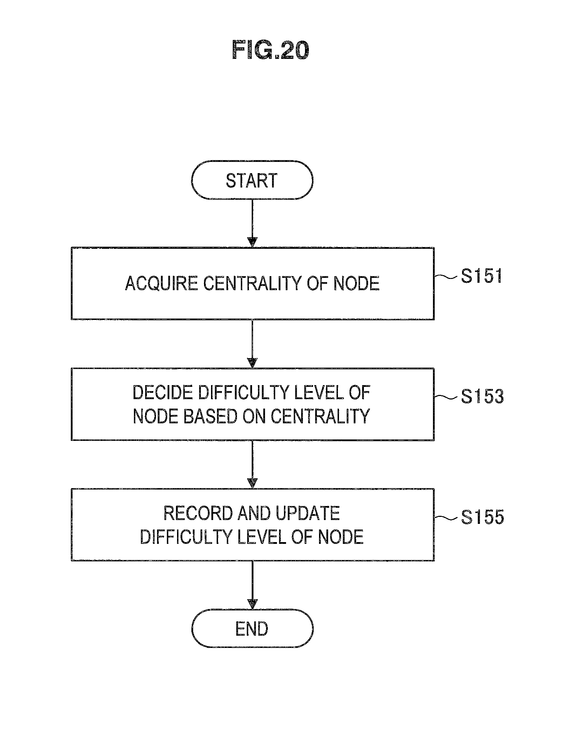

FIG. 20 is a flowchart showing the difficulty level estimation process of the example of FIG. 19. Note that the process of the illustrated example can be executed individually for each node.

First, the difficulty level estimation unit 231 accesses the cluster DB 2503 to acquire centrality of nodes from the cluster table 2503-1 (Step S151). Then, the difficulty level estimation unit 231 decides difficulty levels of the nodes based on the acquired centrality (Step S153). A difficulty level may be defined as, for example, $1-CV_n$ using a value $CV_n$ obtained by normalizing centrality. In other words, a difficulty level is decided herein under the definition that, high centrality of a node corresponds to a low difficulty level thereof due to the fact that the node relates to general knowledge, and low centrality of a node corresponds to a high difficulty level thereof due to the fact that the node relates to special knowledge. The difficulty level estimation unit 231 accesses the difficulty level DB 2507 to record or update the decided difficulty level (Step S155).

(Modified example 2 of difficulty level estimation)

As another example, a difficulty level of each node may be estimated based on the average of the rate of correctness with regard to the node of all users who have answered an exercise question about the node. For example, in the example of table 1 described below, a difficulty level of the node with the node ID "5" of the user U1 is the average (0.2, 0.3, 0.1)= 0.2.

[Table 1]

Table 1: Rate of correctness of each user with respect to each node

| Node ID | 1 | 2 | 3 | 4 | 5 |
|---------|-----|-----|-----|------|-----|
| U1 | 0.5 | 0.8 | 0.2 | 0.1 | |
| U2 | 0.3 | 0.2 | 0.4 | 0.5 | 0.2 |
| U3 | 0.3 | 0.7 | 0.2 | 0.03 | 0.3 |
| U4 | 0.6 | 0.5 | 0.3 | 0.05 | 0.1 |

(Modified example 3 of difficulty level estimation)

As still another example, a difficulty level of each node may be estimated using collaborative filtering. To be more specific, a degree of similarity between a difficulty level estimation target node and another node is computed based on the rates of correctness of users who have already answered exercise questions about the target node and the other node. The difficulty level of the target node can be decided based on an expected rate of correctness that is the sum of values obtained by multiplying each rate of correctness of each user with respect to the other node by the degree of similarity between the target node and the other node.

For calculation of difficulty level estimation described above, for example, formula 3 and formula 4 below can be used. Note that, in formula 3 and formula 4, sim(j, k) indicates a degree of similarity between a node j and a node k, M(i, j) indicates a rate of correctness of a user i with respect to the node j, and $S_{CF}(k)$ indicates an expected rate of correctness of the node k. Here, there are assumed to be N users including 1, 2, ..., and N and P nodes including 1, 2, ..., and P.

[Math 3]

$$sim(j,k) = \frac{\sum_{i=1}^{N} M(i,j) \cdot M(i,k)}{\sqrt{\sum_{i=1}^{N} M(i,j)^2} \cdot \sqrt{\sum_{i=1}^{N} M(i,k)^2}} \quad \cdot \cdot \cdot (\text{Formula } 3)$$

[Math 4]

$$S_{CF}(k) = \sum_{j=1}^{P} sim(j,k) \cdot M(i,j) \quad \cdot \cdot \cdot (\text{Formula } 4)$$

Note that a calculation method of a degree of similarity between nodes is not limited to the example of formula 3 described above, and various known calculation methods of a degree of similarity can be employed. In addition, a calculation method of an expected rate of correctness of nodes is not limited to the example of formula 4 described above either, and various calculation methods with which a value having the same meaning can be computed can be employed.

As described above, a difficulty level of knowledge content corresponding to a node is estimated in the second embodiment of the present disclosure. A difficulty level may be estimated using, for example, centrality as in the first example and the first modified example. Alternatively, a difficulty level may be estimated without using centrality as in the second and third modified examples. Centrality can be computed independently of classification of nodes into clusters. Thus, whether or not centrality is used, knowledge content may not necessarily be clustered for estimation of a difficulty level.

(3-3. Third embodiment)

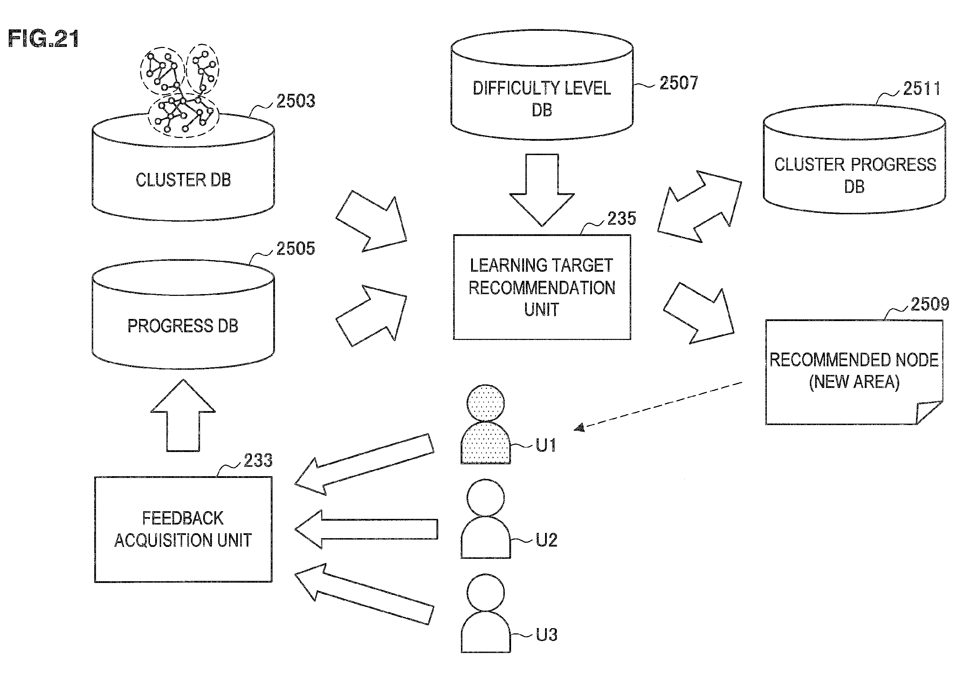

Next, a third embodiment of the present disclosure will be described with reference to FIGS. 21 to 23. In the present embodiment, a learning target recommendation process is executed using a result of the clustering process described as the first embodiment.

FIG. 21 is a diagram schematically showing the learning target recommendation process of the third embodiment of the present disclosure. The learning target recommendation unit 235 provides a user with recommended node information 2509 based on data acquired from the cluster DB 2503, the progress DB 2505, and the difficulty level DB 2507. The recommended node information 2509 provided in a first example can be information for recommending a learning target node of a new area which a learning target recommendation target user (user U1) has not yet learned. In addition, the learning target recommendation unit 235 generates a clustering progress DB 2511 as intermediate data.

Note that, since the data of the progress DB 2505 and the difficulty level DB 2507 can be generated in the same manner as the difficulty level estimation process described above, detailed description with respect to the data will herein be omitted. The learning target recommendation process may be executed using each piece of the data generated in the difficulty level estimation process that is separately executed, or each piece of data may be newly generated in the same process as the difficulty level estimation process for the learning target recommendation process. In the illustrated first example, the feedback acquisition unit 233 acquires feedback from the plurality of users U including the learning target recommendation target user and the other users (including the user U1, the user U2, and the user U3 in the example of FIG. 21).

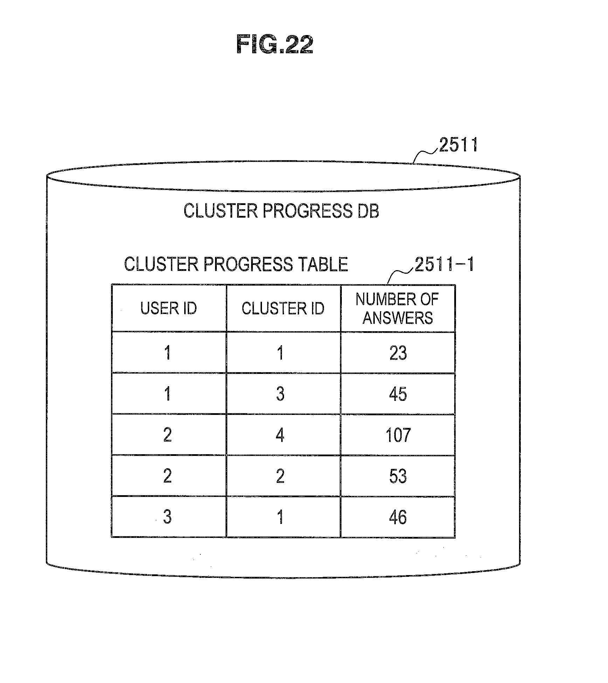

FIG. 22 is a diagram showing an example of the clustering progress DB of the third embodiment of the present disclosure. The clustering progress DB 2511 can include, for example a clustering progress table 2511-1.

The clustering progress table 2511-1 is a table on which progress in learning of the users with regard to each cluster is recorded, and includes the items of, for example, user ID, cluster ID, the number of answers, and the like. "User ID" is the same item as the user ID in other DBs described above, representing IDs for identifying the users. "Cluster ID" is the same item as the cluster ID of the cluster DB 2503, representing IDs for identifying clusters obtained by classifying nodes. "The number of answers" is the number of times the users have answered practice questions presented for the nodes which are classified into each cluster. Note that, as will be described later, the item of the number of answers is used as information indicating the number of times each user accesses the nodes which are included in the clusters for learning. For this reason, for example, an item of the number of references or the like may be set instead of or along with the number of answers.

As is understood from the above description, data of similar content to the progress table 2505-1 described above is recorded in the clustering progress table 2511-1, however, there is a difference from the progress table 2505-1 in that data is recorded for each association of a user and a cluster.

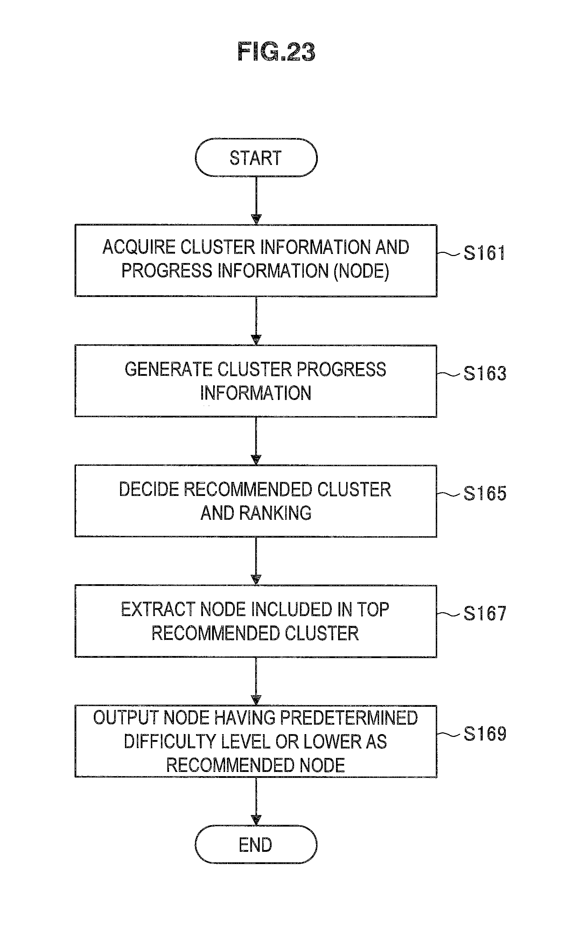

FIG. 23 is a flowchart showing an example of the learning target recommendation process of the third embodiment of the present disclosure. The drawing shows a process from acquisition and processing of data from each DB by the learning target recommendation unit 235 to output of a recommended node.

First, the learning target recommendation unit 235 accesses the cluster DB 2503 to acquire cluster information and accesses the progress DB 2505 to acquire progress information (Step S161). Note that the progress information acquired here is information recorded for each association of a user and a node.

Next, the learning target recommendation unit 235 generates clustering progress information in the clustering progress DB 2511 (Step S163). For example, the number of answers included in the clustering progress information can be computed by adding the numbers of answers included in the progress information of each node acquired in Step S161 for each cluster according to the cluster information.

Next, the learning target recommendation unit 235 decides recommended clusters according to rankings (Step S165). In this example, since the recommended clusters are decided by computing a recommendation level of each cluster as will be described later, rankings thereof can also be decided in order from, for example, higher recommendation levels.

Next, the learning target recommendation unit 235 extracts nodes included in recommended clusters of a high ranking (Step S167). For example, the learning target recommendation unit 235 extracts nodes which are classified into clusters included in top s (s is a predetermined number) clusters in terms of high rankings among the recommended clusters. Note that a ranking may be designated using, for example, the number of clusters such as "top s clusters," or using a rate such as "top s%."

Next, the learning target recommendation unit 235 outputs a node of which a difficulty level is equal to or lower than a predetermined one among the extracted nodes as a recommended node (Step S169). Here, the learning target recommendation unit 235 acquires data of the difficulty levels of the extracted nodes from the difficulty level DB 2507. In this example, one reason for outputting the node of which the difficulty level is equal to or lower than the predetermined one as a recommended node is that the recommended node is a node of a cluster which a user has not learned so far and thus it is considered preferable that the node be a node that has a difficulty level that is not very high and can be easily dealt with by the user.

Herein, an example of a decision process of a recommended cluster in Step S165 described above will be further described. A recommended cluster can be decided using, for example, the collaborative filtering as the process example of the difficulty level estimation described above. In this case, a degree of similarity between clusters is computed based on the number of answers of a target user and other users with respect to each cluster. A recommendation level of a cluster which the target user has not learned again (not-learned cluster) can be computed as the sum of values obtained by multiplying the number of answers to clusters which the target user has already learned (already-learned clusters) by a degree of similarity between the already-learned clusters and the not-learned cluster.

For the calculation of a recommendation level of a cluster described above, for example, formula 5 and formula 6 below can be used. Note that, in formula 5 and formula 6, sim(m, n) indicates a degree of similarity between a cluster m and a cluster n, K(i, m) indicates the number of answers of a user i to the cluster m, and $R_{CF}(n)$ indicates a recommendation level of the cluster n. Here, there are assumed to be N users including 1, 2, ...., and N and Q clusters including 1, 2, ..., and Q.

[Math 5]

$$sim(m,n) = \frac{\sum_{i=1}^{N} K(i,m) \cdot K(i,n)}{\sqrt{\sum_{i=1}^{N} K(i,m)^2} \cdot \sqrt{\sum_{i=1}^{N} K(i,n)^2}} \quad \cdots \text{(Formula 5)}$$

[Math 6]

$$R_{CF}(n) = \sum_{m=1}^{Q} sim(m,n) \cdot K(i,m) \quad \cdots \text{(Formula 6)}$$

Note that a calculation method of a degree of similarity between clusters is not limited to the example of formula 5 described above, and various known calculation methods of a degree of similarity can be employed. In addition, a calculation method of a recommendation level of a cluster is not limited to the example of formula 6 described above, and various calculation methods in which a value having the same meaning can be computed can be employed.

Through the process described above, it is possible to determine whether or not a cluster which a user has not yet learned is proper as a new learning target of the user, and to present a node of a more proper cluster to the user as a recommended node for gaining new knowledge. In addition, at that time, by setting a node with a difficulty level equal to or lower than a certain level to be a recommended node, it is possible to help the user easily start learning of a new field.

(3-4. Fourth embodiment)

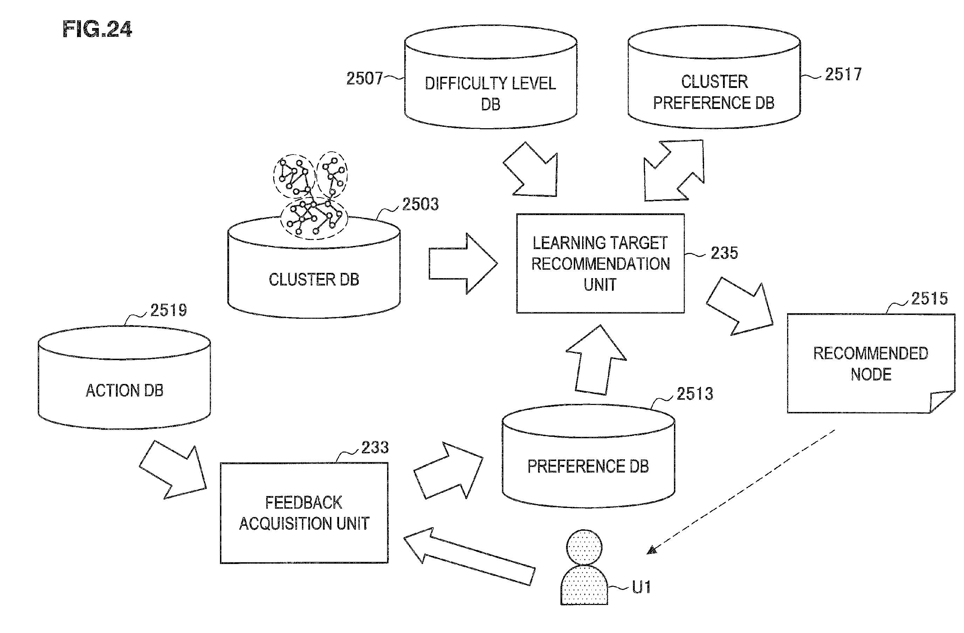

Next, a fourth embodiment of the present disclosure will be described with reference to FIGS. 24 to 29. In the present embodiment, a learning target recommendation process different from the third embodiment described above is executed using a result of the clustering process described as the first embodiment.

FIG. 24 is a diagram schematically showing the learning target recommendation process of the fourth embodiment of the present disclosure. The learning target recommendation unit 235 provides a user with recommended node information 2515 based on data acquired from the cluster DB 2503, the difficulty level DB 2507, and a preference DB 2513. The recommended node information 2515 provided in a second example can be information for recommending a node of a cluster which the learning target recommendation target user (user U1) has already learned. In addition, the learning target recommendation unit 235 generates a cluster preference DB 2517 as intermediate data.

Data of the preference DB 2513 used in the above-described process is recorded by the feedback acquisition unit 233. The feedback acquisition unit 233 acquires a manipulation on knowledge content or learning support information by a user U as feedback. Furthermore, the feedback acquisition unit 233 accesses an action DB 2519 to acquire information of weight corresponding to the manipulation of the user acquired as feedback. The feedback acquisition unit 233 accesses the preference DB 2513 to add a value corresponding to the acquired weight to a preference score of a node. Note that, in the illustrated second example, the feedback acquisition unit 233 acquires feedback from the learning target recommendation target user (the user U1 in the example of FIG. 24).

Note that, since the data of the difficulty level DB 2507 can be generated in the same manner as in the difficulty level estimation process described above, detailed description thereof will be omitted herein. The learning target recommendation process may be executed using data which is generated in the difficulty level estimation process executed separately, or new data may be generated for the learning target recommendation process in the same process as the difficulty level estimation process.

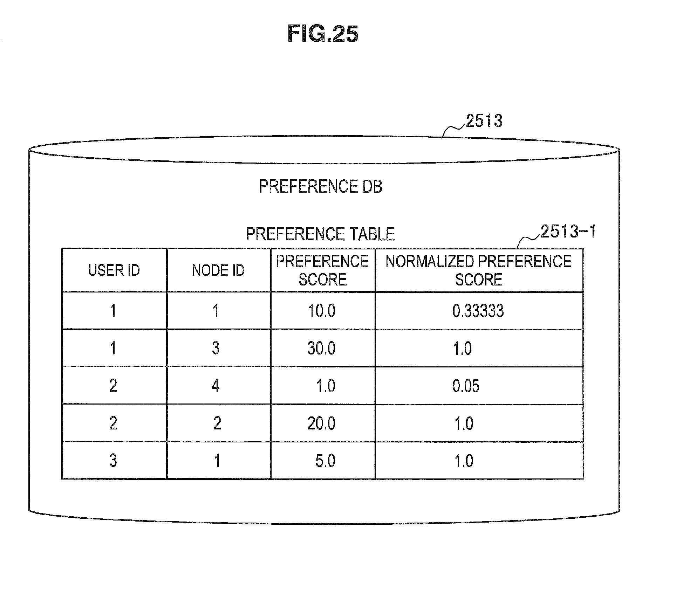

FIG. 25 is a diagram showing an example of the preference DB of the fourth embodiment of the present disclosure. The preference DB 2513 can include, for example, a preference table 2513-1.

The preference table 2513-1 is a table on which preferences of users for each node are recorded, and includes items of, for example, user ID, node ID, preference score, normalized preference score, and the like. "User ID" and "node ID" are the same items as the user ID and the node ID in other DBs described above, representing IDs for identifying each user and node. As described above, the learning target recommendation process is established with feedback from a target user in this example. For this reason, the item of user ID may not necessarily be set. The item of user ID, however, can be set in the preference table 2513-1 to identify for which user data is provided such as when, for example, the data is recorded to recommend a learning target to each of a plurality of users.

"Preference score" is a score to be added according to weight recorded in the action DB 2519 to be described later when there is feedback from users on each node. "Normalized preference score" is a value obtained by normalizing a preference score of each node by a maximum value for each user.

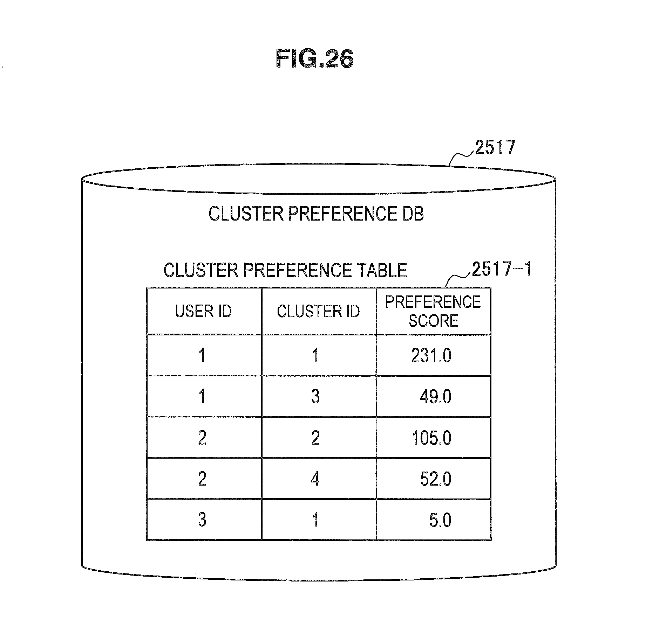

FIG. 26 is a diagram showing an example of the cluster preference DB of the fourth embodiment of the present disclosure. The cluster preference DB 2517 can include, for example, a cluster preference table 2517-1.

The cluster preference table 2517-1 is a table on which preferences of users for each cluster are recorded, and includes items of, for example, user ID, cluster, ID, preference score, and the like. "User ID" and "cluster ID" are the same items as the user ID and the cluster ID in other DBs described above, representing IDs for identifying each user and cluster. "Preference score" represents the sum for each cluster of preference scores of nodes which are classified into each cluster.

As is understood from the above description, data of similar content to that of the preference table 2513-1 described above is recorded in the cluster preference table 2517-1, however, there is a difference from the preference table 2513-1 in that the data is recorded for each association of a user and a cluster.

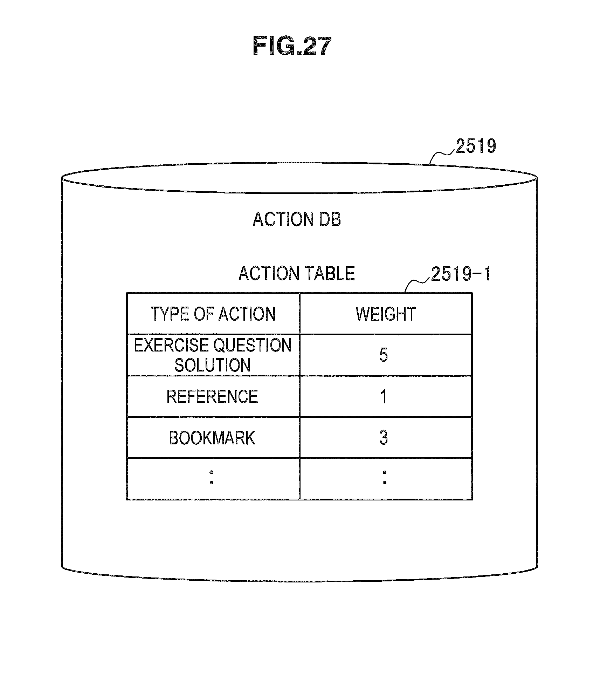

FIG. 27 is a diagram showing an example of the action DB of the fourth embodiment of the present disclosure. The action DB 2519 can include, for example, an action table 2519-1.

The action table 2519-1 is a table on which weight corresponding to various actions acquired from users as feedback is recorded, and includes items of, for example, action type, weight, and the like. "Action type" represents the type of an action acquired from a user by the feedback acquisition unit 233 as feedback. In the illustrated example, the types of "exercise question solutions," "reference," "bookmark," and the like are defined. As described above, an action can consist of a series of user manipulations which have certain meanings.

"Weight" is set for each type of action. Weight is set, for example, according to intensity of interest of a user on a node which is expressed with the action. In the illustrated example, five times and three times the weight of simple "reference" are set for the "exercise question solutions" and "bookmark" respectively. This is because a user is supposed to have stronger interest in knowledge content when he or she bookmarks the content or gives an answer to an exercise question with regard to the content than when he or she simply refers to the content. Note that, as another example, the "exercise question solutions" may be classified into two of "correct answers" and "wrong answers" and then set with different kinds of weights respectively.

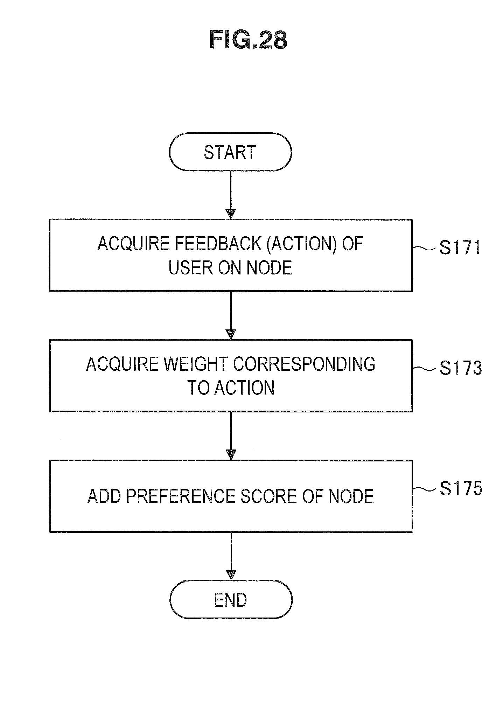

FIG. 28 is a flowchart showing an example of a feedback acquisition process of the fourth embodiment of the present disclosure. In the present embodiment, a feedback acquisition process different from that described with reference to FIG. 17 above can be executed. The drawing shows a process in which the feedback acquisition unit 233 records data according to feedback acquired from users in the preference DB 2513.

First, the feedback acquisition unit 233 acquires feedback of the users on the nodes (Step S171). Feedback mentioned herein can indicate various kinds of actions of the users with respect to the node, or can be, for example, referring to content, bookmarking, answering an exercise question, or the like.

Next, the feedback acquisition unit 233 accesses the action DB 2519 to acquire the weight corresponding to the action indicated by the acquired feedback (Step S173).

Next, the feedback acquisition unit 233 adds the value according to the acquired weight to preference scores of the nodes (Step S175). Specifically, the feedback acquisition unit 233 accesses the preference DB 2513, and when data corresponding to an association of a target user and node has already been recorded, adds the value according to the acquired weight to the values of the preference scores. When the data has not yet been recorded, data is newly recorded.

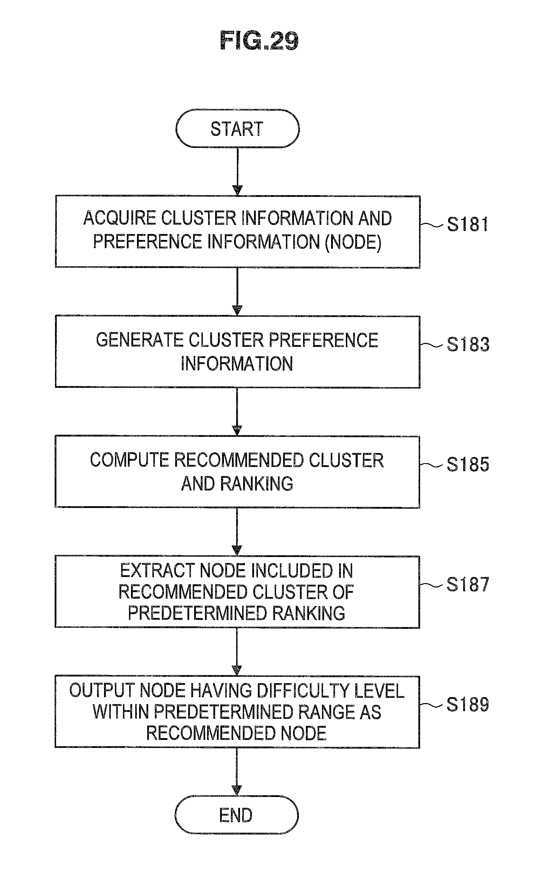

FIG. 29 is a flowchart showing an example of the learning target recommendation process of the fourth embodiment of the present disclosure. The drawing shows a process performed by the learning target recommendation unit 235 from when the unit receives the result of the feedback acquisition process shown in FIG. 28 to when the unit outputs a recommended node.

First, the learning target recommendation unit 235 accesses the cluster DB 2503 to acquire cluster information and accesses the preference DB 2513 to acquire preference information (Step S181). Note that the preference information acquired here is information recorded for each node.

Next, the learning target recommendation unit 235 generates cluster preference information in the cluster preference DB 2517 (Step S183). For example, a preference score included in the cluster preference information can be computed by adding preference scores included in the preference information acquired in Step S181 for each cluster according to the cluster information.

Next, the learning target recommendation unit 235 decides recommended clusters with ranking (Step S185). In this example, since the recommended clusters are decided based on the preference scores of each cluster, it is also possible to decide rankings in order from, for example, higher preference scores.

Next, the learning target recommendation unit 235 extracts nodes which are included in recommended clusters of predetermined rankings (Step S187). For example, the learning target recommendation unit 235 extracts nodes which are classified into clusters of which rankings are included in top $t$ ($t$ is a predetermined number) clusters among the recommended clusters. Note that a ranking may be designated using, for example, the number of clusters such as "top $t$ clusters," or using a rate such as "top $t$%."

Alternatively, the learning target recommendation unit 235 may extract nodes which are classified into clusters of which rankings are included in the range of top $t$% to $u$% ($t$ and $u$ are predetermined numbers) among the recommended clusters. In the present embodiment, since nodes of clusters which the users have already learned are recommended, recommendation of a cluster having an excessively high preference score is considered unnecessary.

Next, the learning target recommendation unit 235 outputs a node among the extracted nodes of which a difficulty level is within a predetermined range as a recommended node (Step S189). Here, the learning target recommendation unit 235 acquires data of the difficulty level of the extracted node from the difficulty level DB 2507. In this example, one reason for outputting a node of which a difficulty level is within the predetermined range as a recommended node is that, since the recommended node is a node of a cluster that the users have already learned, the users are considered to be less willing to learn it due to its excessively low difficulty level. Thus, the range of difficulty level set here may be changed according to, for example, a preference score of a cluster into which nodes are classified (a range of higher difficulty levels is set for clusters with higher preference scores).

Through the processes described above, it is possible to determine what extent of interest a user has in a cluster that the user has already learned, and to present a node of the cluster in which the user has greater interest to the user as a recommended node for acquiring more knowledge. In addition, at this time, by setting a node in a proper range of a difficulty level as a recommended node, it is possible to allow users to progress through learning while feeling positive feedback (achievements).

(3-5. Fifth embodiment)

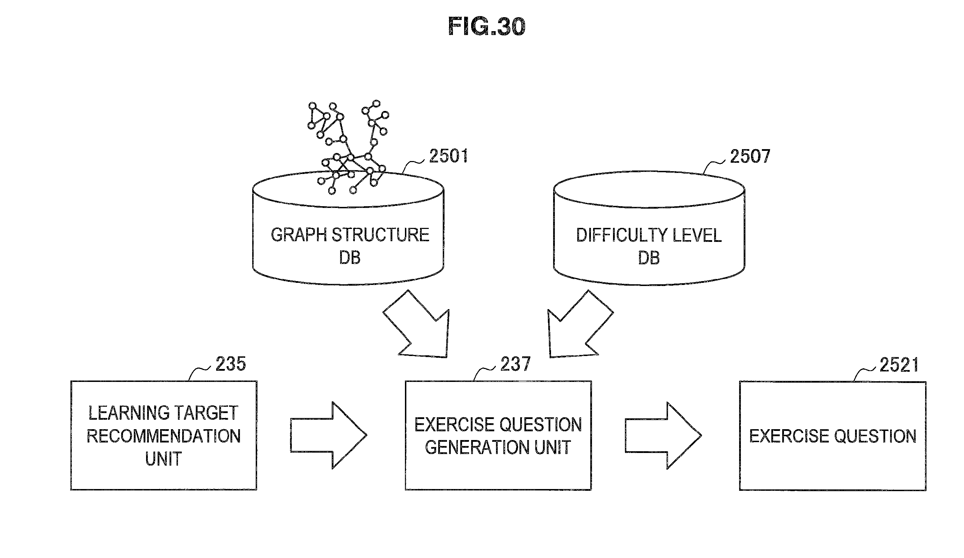

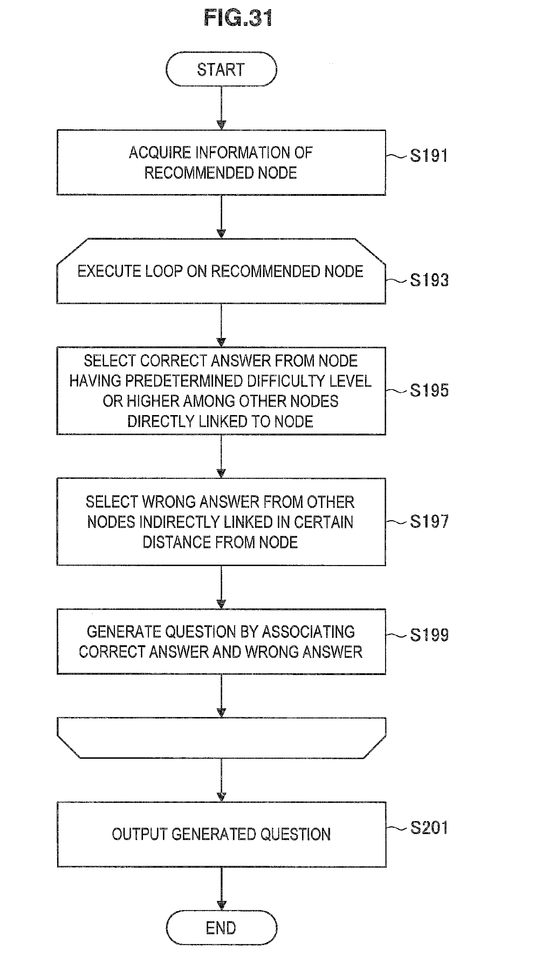

Next, a fifth embodiment of the present disclosure will be described with reference to FIGS. 30 and 31. In the present embodiment, an exercise question generation process is executed using the result of the clustering process described as the first embodiment.

FIG. 30 is a diagram schematically showing the exercise question generation process of the fifth embodiment of the present disclosure. The exercise question generation unit 237 generates an exercise question 2521 based on information of the recommended node output from the learning target recommendation unit 235 and data acquired from the graph structure DB 2501 and the difficulty level DB 2507.

FIG. 31 is a flowchart showing an example of the exercise question generation process of the fifth embodiment of the present disclosure. The drawing shows a process in which the exercise question generation unit 237 acquires the information described above and generates and outputs the exercise question.

First, the exercise question generation unit 237 acquires the information of the recommended node output from the learning target recommendation unit 235 (Step S191). The information of the recommended node may be directly output to the exercise question generation unit 237 from the learning target recommendation unit 235. In this case, the exercise question generation process is executed, for example, in continuation of the learning target recommendation process. Alternatively, the learning target recommendation process is executed as a pre-process of the exercise question generation process.

Thereafter, the exercise question generation unit 237 executes a loop process on the each recommended node (Step S193). Note that the number of target nodes may be one, and in that case, the process does not loop.

In the process for each node, first, the exercise question generation unit 237 selects a correct answer from nodes having a predetermined difficulty level or higher among other nodes that are directly linked to the node (Step S195). The other nodes which are directly linked to the node are, in other words, other nodes within one step from the graph structure. The exercise question generation unit 237 accesses the graph structure DB 2501 and the difficulty level DB 2507 to acquire information of nodes which satisfy the condition. Note that the other nodes extracted here may be limited to nodes which are classified into the same cluster as the target nodes. In this case, the exercise question generation unit 237 accesses the cluster DB 2503 in addition to the graph structure DB 2501 to acquire information of nodes that satisfy the condition. A node that is selected as a correct answer can be randomly selected from the nodes that satisfy the condition.

Next, the exercise question generation unit 237 selects a predetermined number of wrong answers from other nodes that are indirectly linked in a certain distance from the nodes (Step S197). Here, the other nodes that are indirectly linked to the nodes in a certain distance are, in other words, other nodes v steps or more and w steps or less (v and w are arbitrary numbers; however, $1 \leq v < w$) from the nodes on the graph structure. The exercise question generation unit 237 accesses the graph structure DB 2501 to acquire information of the nodes that satisfy the condition. In addition, the other nodes extracted here may be limited to nodes which are classified into the same cluster as the target nodes. In this case, the exercise question generation unit 237 accesses the cluster DB 2503 in addition to the graph structure DB 2501 to acquire information of the nodes that satisfy the condition. A node that is selected as a wrong answer can be randomly selected from the nodes that satisfy the condition.

Next, the exercise question generation unit 237 generates a question by associating the selected correct answer and wrong answers (Step S199). In this example, the generated question is a multi-choice question which includes the title of the node selected as the correct answer and the title of the nodes selected as the wrong answers. With the processes so far, the loop process for each node ends. After the process for each of the recommended nodes is executed, the exercise question generation unit 237 outputs the generated question (Step S201).

Through the process described above, an exercise question, for example, such as that displayed on the exercise question display screen 1113 shown in FIG. 5 described above is generated. As in that example, the exercise question is presented to a user as the question sentence 1117 such as "Which is the most closely related concept to the content?" and the options 1119 consisting of the selected correct answer and wrong answers. If the user fully understands the content corresponding to the nodes, he or she can distinguish the other nodes that are directly linked to the nodes and the other nodes that are close to but not directly linked to the nodes. Here, if a node selected as a wrong answer is limited to a node that is classified into the same cluster as a target node, it is not possible to exclude a wrong answer if there is not sufficient knowledge about the cluster, and thus a difficulty level of the question becomes relatively high. On the other hand, if the node that is selected as a wrong answer is also chosen from nodes that are classified into a cluster that is different from the target node, the user is able to exclude the wrong answer only when he or she has a certain degree of knowledge of the cluster, and thus a difficulty level of the question becomes relatively low.

In this manner, in the fifth embodiment of the present disclosure, it is possible to generate an exercise question for automatically checking understanding of the user with regard to knowledge content based on analysis of the graph structure of the content. Thus, even when the user acquires knowledge using content that is not the knowledge content prepared in advance, he or she can ascertain the degree of his or her understanding using the exercise question and can efficiently progress through acquisition of knowledge.

Note that, as is obvious from the fact that the progress DB, the preference DB, and the like are not directly referred to, the process described above can be executed on an arbitrary node regardless of whether the node is one that the user has already learned or not yet learned. Thus, a recommended node that is given as a target for generation of an exercise question may be one provided according to the first example, the second example described above, or any other example. Further, the target for generating an exercise question may not necessarily be a recommended node, and an exercise question can be generated with respect to, for example, an arbitrary node designated through a user manipulation, or a node automatically selected based on another criterion. In this case, the clustering process described as the first embodiment is not necessary for the generation of an exercise question at all times.

(3-6. Sixth embodiment)

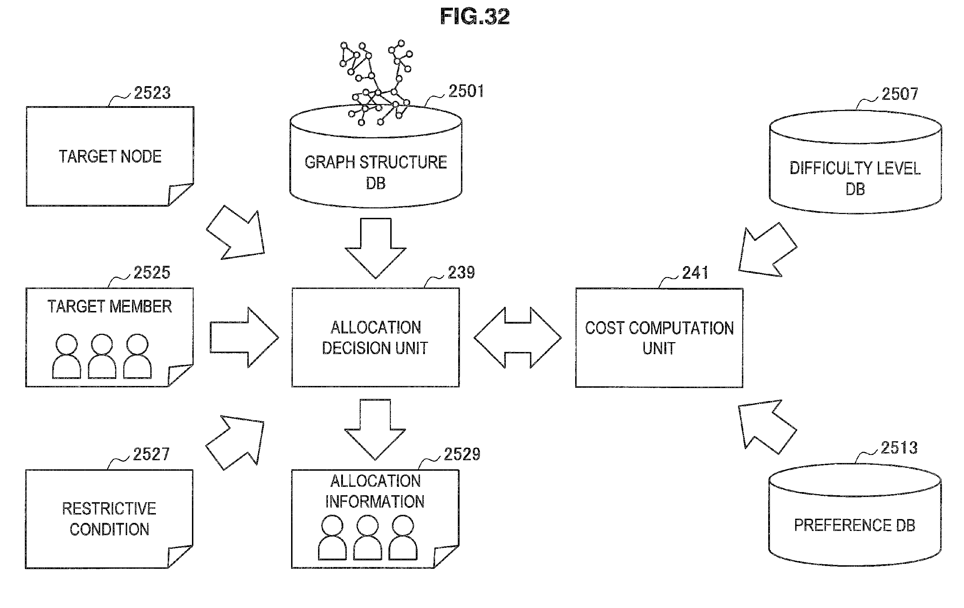

Next, a sixth embodiment of the present disclosure will be described with reference to FIGS. 32 to 34. In the present embodiment, an allocation decision process is executed using the result of the clustering process described as the first embodiment. The allocation decision process is a process of deciding which content and to which users it is most appropriate to allocate acquisition when, for example, a plurality of users of a team or the like have to acquire knowledge content of a certain category.

FIG. 32 is a diagram schematically showing the allocation decision process of the sixth embodiment of the present disclosure. The allocation decision unit 239 receives inputs of target node information 2523, target member information 2525, and restrictive condition information 2527, acquires data from the graph structure DB 2501, and outputs allocation information 2529. At this time, the allocation decision unit 239 uses information of a learning cost of the target member with respect to the target node which has been computed by the cost computation unit 241. The cost computation unit 241 acquires data from the difficulty level DB 2507 and the preference DB 2513 to compute the learning cost.

Note that, since the data of the difficulty level DB 2507 and the preference DB 2513 can be generated in the same manner as in the difficulty level estimation process and the learning target recommendation process described above, detailed description thereof will be omitted herein. The allocation decision process may be executed using the data generated in the difficulty level estimation process and the learning target recommendation process which are separately executed, or data may be newly generated in the same processes as the difficulty level estimation process and the learning target recommendation process for the allocation decision process.

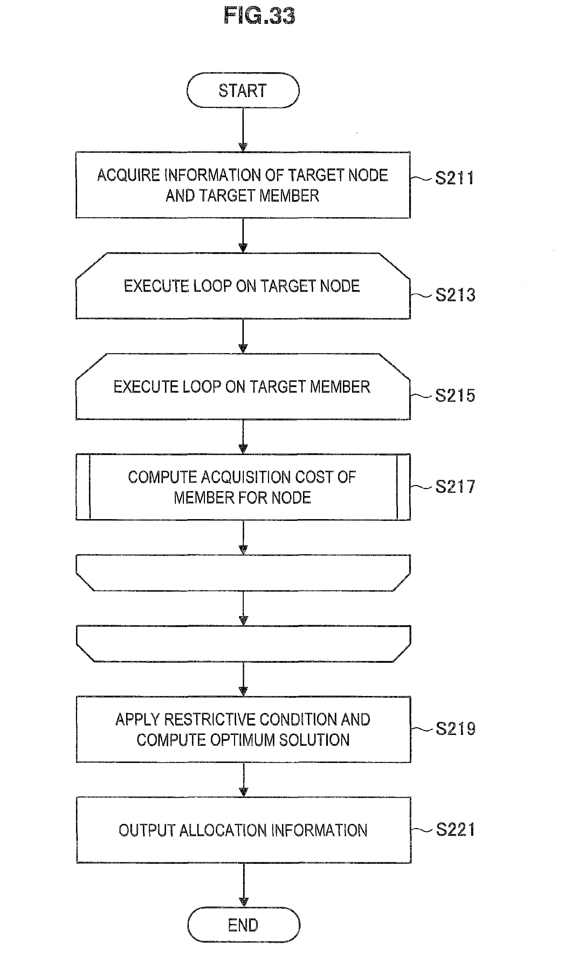

FIG. 33 is a flowchart showing an example of the allocation decision process of the sixth embodiment of the present disclosure. The drawing shows a process of the allocation decision unit 239 to acquire each piece of information as an input and output allocation information.

First, the allocation decision unit 239 acquires the target node information 2523 and the target member information 2525 which are given as inputs (Step S211). The target node information 2523 may be given by, for example, directly designating a node, or may be given in units of clusters output as the result of the clustering process described above.

Thereafter, with respect to target nodes and target members, acquisition costs of each of the members with respect to each of the nodes are computed through a loop process for each node (Step S213) and a loop process for each member (Step S215) executed during the process. A part or all of the loop processes may be controlled by the allocation decision unit 239. In this case, the allocation decision unit 239 asks the computation process of the acquisition costs for each node, member, or node and member for the cost computation unit 241. A loop process that is not controlled by the allocation decision unit 239 can be controlled by the cost computation unit 241.

As a process for each node and each member, the cost computation unit 241 computes an acquisition cost of the member for the node (Step S217). The acquisition cost is a value that expresses a cost incurred when, for example, a member acquires a certain node in units of time and manpower. Note that details of the acquisition cost computation process will be described later.

When the loop process for each node and each member ends, the allocation decision unit 239 computes an optimum solution based on the computed acquisition cost and by further applying a restrictive condition imposed by the restrictive condition information 2527 thereto (Step S219). The restrictive condition can be a condition that, for example, "all members deal with a minimum of one node," "the sum of acquisition costs be minimized," or the like. For the computation of the optimum solution, for example, exhaustive search, a genetic algorithm, or dynamic programming, or the like can be used. The allocation decision unit 239 outputs the allocation information 2529 based on the computed optimum solution (Step S221).

With respect to a relation between acquisition costs and allocation in the above-described example, description will be further provided below showing table 2 as an example.

[Table 2]

Table 2: Cost of each member

|  | Cost incurred | Node 1 | Node 2 | Node 3 | Node 4 |
|---|---|---|---|---|---|
| Member 1 | 10 | 15 | 10 | 13 | 12 |
| Member 2 | 15 | 5 | 4 | 2 | 6 |
| Member 3 | 20 | 3 | 4 | 5 | 5 |
| Member 4 | 10 | 2 | 2 | 3 | 4 |

In table 2, "incurred cost" is the sum of costs that each member incurs to learn a series of nodes, and is decided based on, for example, a length of a work time that each member can prepare. Information of the "incurred cost" can be included in, for example, the target member information 2525. Data shown for "node 1" to "node 4" is learning costs incurred when each of the members is assumed to learn each of the nodes. Here, the sum of learning costs allocated to each member does not exceed the costs incurred. Thus, a solution that, for example, all of the nodes 1 to 4 are allocated to the member 4 (the sum of learning costs is 2+2+3+4=11, which exceeds 10 that is the incurred cost of the member 4) will not be computed.

In the example described above, when the restrictive condition that "all members deal with a minimum of one node" is set, for example, the optimum solution that it is proper for respectively allocating the node 1 to the member 4, the node 2 to the member 1, the node 3 to the member 2, and the node 4 to the member 3 is obtained. In addition, when the restrictive condition that "the sum of acquisition costs be minimized" is set, for example, the optimum solution that it is proper for respectively allocating the nodes 1, 2, and 4 to the member 4 and the node 3 to the member 2 is obtained.

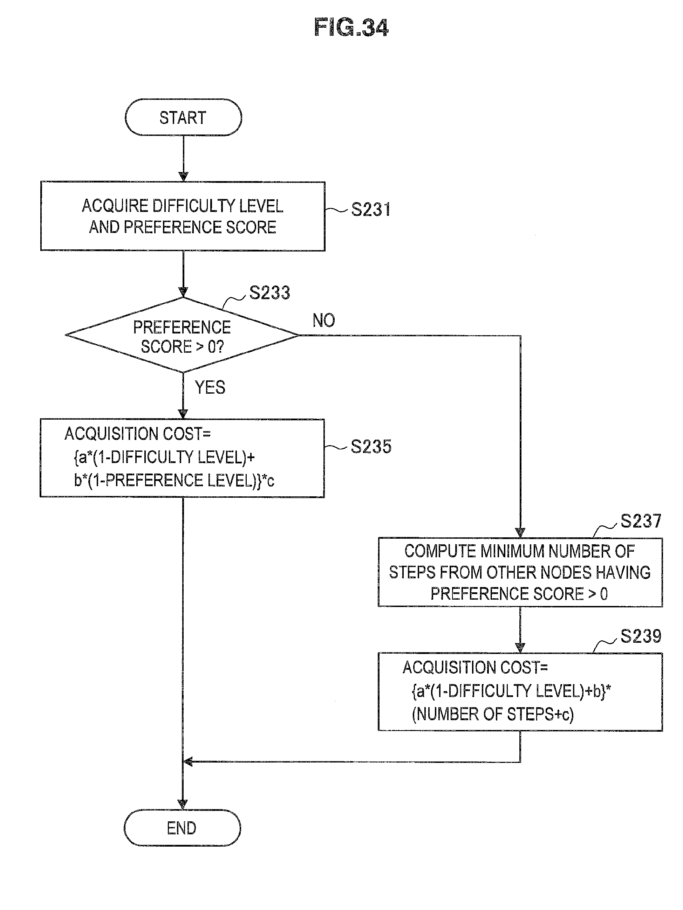

FIG. 34 is a flowchart showing an example of the acquisition cost computation process of the sixth embodiment of the present disclosure. The drawing shows a process performed by the cost computation unit 241 to compute an acquisition cost according to a difficulty level of a node and information of a preference score.

First, the cost computation unit 241 accesses the difficulty level DB 2507 and the preference DB 2513 to acquire information of the difficulty level and the preference score for an association of a member (user) and a node to be processed (Step S231).

Next, the cost computation unit 241 determines whether or not the acquired preference score is greater than 0 (Step S233). As described in the fourth embodiment above, a preference score is added according to, for example, feedback of a user on each node. Thus, a preference score of 0 can indicate that, for example, the user has not learned the node. Alternatively, when there is an action for which weight at the time of addition of the preference score is set to 0, the preference score is 0 even when the user has learned the node but has not made a valid action (weight>0).

When the preference score is determined to be greater than 0 in Step S233, the cost computation unit 241 computes the acquisition cost using the following formula 7 (Step S235). Note that, in formula 7, a, b, and c are predetermined coefficients, and a preference level is a normalized preference score of a node.

$$\text{Acquisition cost} = \{a*(1-\text{difficulty level}) + b*(1-\text{preference level})\}*c \ \dots \ \text{Formula (7)}$$

On the other hand, when the acquired preference score is determined to be 0 in Step S233, the cost computation unit 241 accesses the preference DB 2513, then searches for another node whose preference score is greater than 0, and then computes a minimum number of steps from the other node to the node to be processed (Step S237). The number of steps is the number of links intervening between the other node and the node to be processed in the graph structure.

Next, the cost computation unit 241 computes an acquisition cost using the following formula 8 (Step S239). Note that, in formula 8, a, b, and c are predetermined coefficients and may have the same values as in, for example, formula 7.

$$\text{Acquisition cost} = \{a*(1-\text{difficulty level}) + b\}*(\text{the number of steps}+c) \ \dots \ \text{Formula (8)}$$

Through the process described above, a learning task with respect to a group of learning content is automatically and appropriately allocated to the plurality of users. By computing the acquisition cost based on the difficulty level and the preference score, it is possible to quantitatively evaluate costs incurred when each of the users acquires the nodes (knowledge content) and to enable efficient learning of the group by performing reasonable allocation of the learning task.

(4. Hardware Configuration)

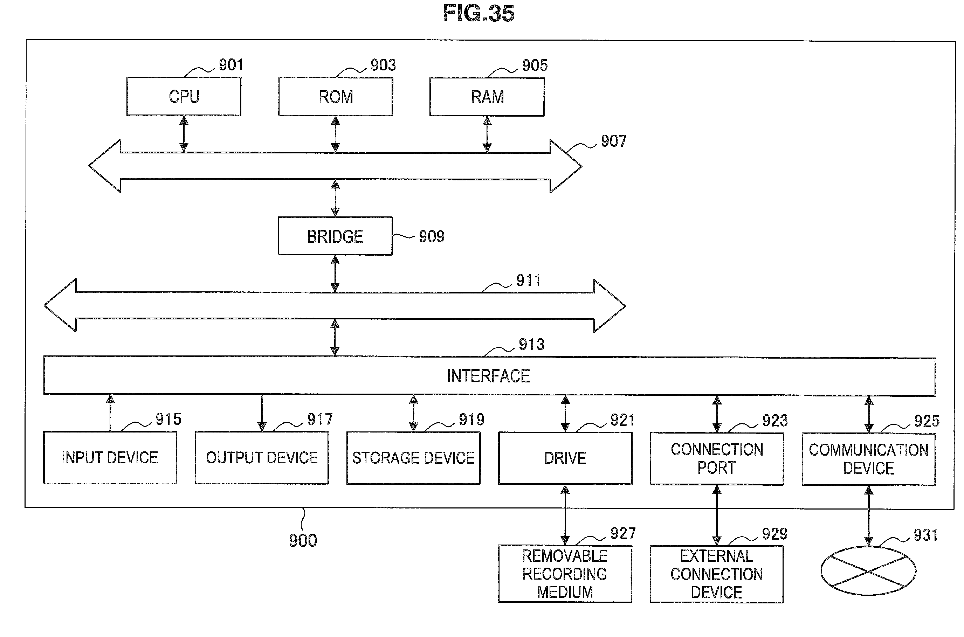

Next, a hardware configuration of the information processing device according to an embodiment of the present disclosure will be described with reference to FIG. 35. FIG. 35 is a block diagram for describing the hardware configuration of the information processing device. An information processing device 900 illustrated in the drawing may realize the terminal device, the server device, or the like in the aforementioned embodiments.

The information processing device 900 includes a central processing unit (CPU) 901, a read only memory (ROM) 903, and a random access memory (RAM) 905. In addition, the information processing device 900 may include a host bus 907, a bridge 909, an external bus 911, an interface 913, an input device 915, an output device 917, a storage device 919, a drive 921, a connection port 923, and a communication device 925. The information processing device 900 may include a processing circuit such as a digital signal processor (DSP), alternatively or in addition to the CPU 901.

The CPU 901 serves as an operation processor and a controller, and controls all or some operations in the information processing device 900 in accordance with various programs recorded in the ROM 903, the RAM 905, the storage device 919 or a removable recording medium 927. The ROM 903 stores programs and operation parameters which are used by the CPU 901. The RAM 905 temporarily stores program which are used in the execution of the CPU 901 and parameters which are appropriately modified in the execution. The CPU 901, ROM 903, and RAM 905 are connected to each other by the host bus 907 configured to include an internal bus such as a CPU bus. In addition, the host bus 907 is connected to the external bus 911 such as a peripheral component interconnect/interface (PCI) bus via the bridge 909.

The input device 915 is a device which is operated by a user, such as a mouse, a keyboard, a touch panel, buttons, switches and a lever. The input device 915 may be, for example, a remote control unit using infrared light or other radio waves, or may be an external connection device 929 such as a mobile phone operable in response to the operation of the information processing device 900. Furthermore, the input device 915 includes an input control circuit which generates an input signal on the basis of the information which is input by a user and outputs the input signal to the CPU 901. By operating the input device 915, a user can input various types of data to the information processing device 900 or issue instructions for causing the information processing device 900 to perform a processing operation.

The output device 917 includes a device capable of visually or audibly notifying the user of acquired information. The output device 917 may include a display device such as a liquid crystal display (LCD), a plasma display panel (PDP), and an organic electro-luminescence (EL) displays, an audio output device such as a speaker or a headphone, and a peripheral device such as a printer. The output device 917 may output the results obtained from the process of the information processing device 900 in a form of a video such as text or an image, and an audio such as voice or sound.

The storage device 919 is a device for data storage which is configured as an example of a storage unit of the information processing device 900. The storage device 919 includes, for example, a magnetic storage device such as a hard disk drive (HDD), a semiconductor storage device, an optical storage device, or a magneto-optical storage device. The storage device 919 stores programs to be executed by the CPU 901, various data, and data obtained from the outside.

The drive 921 is a reader-writer for the removable recording medium 927 such as a magnetic disk, an optical disc, a magneto-optical disc, or a semiconductor memory, and is embedded in the information processing device 900 or attached externally thereto. The drive 921 reads information recorded in the removable recording medium 927 attached thereto, and outputs the read information to the RAM 905. Further, the drive 921 writes recording in the removable recording medium 927 attached thereto.

The connection port 923 is a port used to directly connect devices to the information processing device 900. The connection port 923 may include a universal serial bus (USB) port, an IEEE1394 port, and a small computer system interface (SCSI) port. The connection port 923 may further include an RS-232C port, an optical audio terminal, a high-definition multimedia interface (HDMI) (registered trademark) port, and so on. The connection of the external connection device 929 to the connection port 923 makes it possible to exchange various data between the information processing device 900 and the external connection device 929.

The communication device 925 is, for example, a communication interface including a communication device or the like for connection to a communication network 931. The communication device 925 may be, for example, a communication card for a wired or wireless local area network (LAN), Bluetooth (registered trademark), wireless USB (WUSB) or the like. In addition, the communication device 925 may be a router for optical communication, a router for asymmetric digital subscriber line (ADSL), a modem for various kinds of communications, or the like. The communication device 925 can transmit and receive signals to and from, for example, the Internet or other communication devices based on a predetermined protocol such as TCP/IP. In addition, the communication network 931 connected to the communication device 925 may be a network or the like connected in a wired or wireless manner, and may be, for example, the Internet, a home LAN, infrared communication, radio wave communication, satellite communication, or the like.

The foregoing thus illustrates an exemplary hardware configuration of the information processing device 900. Each of the above components may be realized using general-purpose members, but may also be realized in hardware specialized in the function of each component. Such a configuration may also be modified as appropriate according to the technological level at the time of the implementation.

(5. Supplement)

The embodiments of the present disclosure can include, for example, the information processing device (terminal device or server) described above, system, an information processing method executed by the information processing device or the system, a program for causing the information processing device to function, and a recording medium on which the program is recorded.

So far, the preferred embodiments of the present disclosure have been described above with reference to the accompanying drawings, whilst the technical scope of the present disclosure is not limited to the above examples, of course. A person skilled in the art may find various alterations and modifications within the scope of the appended claims, and it should be understood that they will naturally come under the technical scope of the present disclosure.

Additionally, the present technology may also be configured as below.

(1) An information processing device including:

a content analysis unit configured to analyze a group of content by setting individual pieces of content included in the group of content as nodes of a graph structure and a link between the pieces of the content as a link of the graph structure; and
a learning support information generation unit configured to generate learning support information that supports learning of knowledge provided as at least a part of the group of content based on a result of the analysis.

(2) The information processing device according to (1), wherein the content analysis unit computes centrality that indicates to what extent each of the nodes is a central node in the graph structure.

(3) The information processing device according to (2), wherein the learning support information generation unit includes a difficulty level estimation unit that estimates a difficulty level of the content corresponding to each of the nodes based on the centrality.

(4) The information processing device according to (3),
wherein the learning support information generation unit further includes a feedback acquisition unit that acquires feedback of a user on the content, and

wherein the difficulty level estimation unit estimates a difficulty level of first content on which feedback of the user has not yet been acquired based on feedback of the user acquired on second content and the difference in the centrality of the nodes each corresponding to the first content and the second content.

(5) The information processing device according to any one of (2) to (4), wherein the content analysis unit computes the centrality based on the number of links between each of the nodes and the other nodes.

(6) The information processing device according to (5), wherein the content analysis unit computes the centrality by discriminating and using a link from each of the nodes to the other nodes and a link from the other nodes to the node.

(7) The information processing device according to any one of (1) to (6), wherein the content analysis unit analyzes the group of content by classifying the nodes into clusters.

(8) The information processing device according to (7),
wherein the learning support information generation unit further includes
a feedback acquisition unit that acquires feedback of a user on the content, and
a learning target recommendation unit that recommends the content that is a learning target to the user based on a result obtained by collecting the feedback for each of the clusters.

(9) The information processing device according to (8), wherein the learning target recommendation unit computes a recommendation level of a first cluster of the content corresponding to the classified nodes on which feedback of the user has not yet been acquired based on feedback of another user acquired on the content corresponding to the nodes classified into the first cluster, feedback of the user acquired on the content corresponding to nodes classified into a second cluster, and a degree of similarity between the first cluster and the second cluster, and thereby recommends the content that is a learning target to the user based on the recommendation level.

(10) The information processing device according to (9),
wherein the learning support information generation unit further includes a difficulty level estimation unit that estimates a difficulty level of the content corresponding to the nodes, and
wherein the learning target recommendation unit recommends a piece of content whose difficulty level is lower than a predetermined threshold value to the user as a learning target among the content corresponding to the nodes classified into the cluster selected according to the recommendation level.

(11) The information processing device according to (8),
wherein the feedback acquisition unit estimates a preference level of the user for the content according to a type of action of the user indicated by the feedback, and
wherein the learning target recommendation unit computes a recommendation level of the cluster based on the preference level for the content corresponding to the nodes classified into the cluster, and thereby recommends the content that is a learning target to the user based on the recommendation level

(12) The information processing device according to (11),
wherein the learning support information generation unit further includes a difficulty level estimation unit that estimates a difficulty level of the content corresponding to the nodes, and
wherein the learning target recommendation unit recommends content having the difficulty level set according to the recommendation level to the user as a learning target among the content corresponding to the nodes classified into the cluster that is selected according to the recommendation level.

(13) The information processing device according to any one of (1) to (12), wherein the learning support information generation unit includes an exercise question generation unit that generates an exercise question with regard to the content as a multiple-choice question that has the title of content corresponding to another node having a direct link to each of the nodes corresponding to the content as an option of a correct answer.

(14) The information processing device according to (13), wherein the exercise question generation unit has the titles of content corresponding to other nodes having indirect links to each of the nodes as options of wrong answers of the multiple-choice question.

(15) The information processing device according to (13) or (14),
wherein the content analysis unit analyzes the group of content by classifying the nodes into clusters, and
wherein the exercise question generation unit selects nodes to be used as options of the multiple-choice question from nodes that are classified into the same cluster as the nodes corresponding to the content.

(16) The information processing device according to any one of (13) to (15),
wherein the learning support information generation unit further includes
a feedback acquisition unit that acquires feedback of a user on the content, and
a learning target recommendation unit that recommends the content that is a learning target to the user based on the feedback, and
wherein the exercise question generation unit generates an exercise question with respect to the recommended content.

(17) The information processing device according to any one of (1) to (16),
wherein the learning support information generation unit further includes

a difficulty level estimation unit that estimates a difficulty level of the content with respect to the nodes,
a feedback acquisition unit that acquires feedback of a user on the content and estimates a preference level of the user for the content according to a type of action of the user indicated by the feedback,
and a cost computation unit that computes an acquisition cost of the user incurred for the content based on the difficulty level and the preference level.

(18) The information processing device according to (17), wherein, the learning support information generation unit further includes an allocation decision unit that decides allocation of the content to a plurality of users based on the acquisition cost when the plurality of users learn knowledge provided as at least a part of the group of content.

(19) An information processing method including:

analyzing a group of content by setting individual pieces of content included in the group of content as nodes of a graph structure and a link between the pieces of the content as a link of the graph structure; and
generating learning support information that supports learning of knowledge provided as at least a part of the group of content based on a result of the analysis.

(20) A system configured to include
a terminal device and
one or more server devices that provide a service to the terminal device,
and to provide, in cooperation of the terminal device with the one or more of server devices,
a function of analyzing a group of content by setting individual pieces of content included in the group of content as nodes of a graph structure and a link between the pieces of the content as a link of the graph structure,
and a function of generating learning support information that supports learning of knowledge provided as at least a part of the group of content based on a result of the analysis.

Reference Signs List

| 100, 400, 500 | terminal device |
| --- | --- |
| 200 | server device |
| 210 | content analysis unit |
| 211 | data acquisition unit |
| 213 | clustering unit |
| 230 | learning support information generation unit |
| 231 | difficulty level estimation unit |
| 233 | feedback acquisition unit |
| 235 | learning target recommendation unit |
| 237 | exercise question generation unit |
| 239 | allocation decision unit |
| 241 | cost computation unit |
| 250 | DB |
| 300 | knowledge content |

**Claims**

1. An information processing device comprising:

   a content analysis unit configured to analyze a group of content by setting individual pieces of content included in the group of content as nodes of a graph structure and a link between the pieces of the content as a link of the graph structure; and
   a learning support information generation unit configured to generate learning support information that supports learning of knowledge provided as at least a part of the group of content based on a result of the analysis.

2. The information processing device according to claim 1, wherein the content analysis unit computes centrality that indicates to what extent each of the nodes is a central node in the graph structure.

3. The information processing device according to claim 2, wherein the learning support information generation unit includes a difficulty level estimation unit that estimates a difficulty level of the content corresponding to each of the nodes based on the centrality.

4. The information processing device according to claim 3,
wherein the learning support information generation unit further includes a feedback acquisition unit that acquires feedback of a user on the content, and
wherein the difficulty level estimation unit estimates a difficulty level of first content on which feedback of the user has not yet been acquired based on feedback of the user acquired on second content and the difference in the centrality of the nodes each corresponding to the first content and the second content.

5. The information processing device according to claim 2, wherein the content analysis unit computes the centrality based on the number of links between each of the nodes and the other nodes.

6. The information processing device according to claim 5, wherein the content analysis unit computes the centrality by discriminating and using a link from each of the nodes to the other nodes and a link from the other nodes to the node.

7. The information processing device according to claim 1, wherein the content analysis unit analyzes the group of content by classifying the nodes into clusters.

8. The information processing device according to claim 7,
wherein the learning support information generation unit further includes
a feedback acquisition unit that acquires feedback of a user on the content, and
a learning target recommendation unit that recommends the content that is a learning target to the user based on a result obtained by collecting the feedback for each of the clusters.

9. The information processing device according to claim 8, wherein the learning target recommendation unit computes a recommendation level of a first cluster of the content corresponding to the classified nodes on which feedback of the user has not yet been acquired based on feedback of another user acquired on the content corresponding to the nodes classified into the first cluster, feedback of the user acquired on the content corresponding to nodes classified into a second cluster, and a degree of similarity between the first cluster and the second cluster, and thereby recommends the content that is a learning target to the user based on the recommendation level.

10. The information processing device according to claim 9,
wherein the learning support information generation unit further includes a difficulty level estimation unit that estimates a difficulty level of the content corresponding to the nodes, and
wherein the learning target recommendation unit recommends a piece of content whose difficulty level is lower than a predetermined threshold value to the user as a learning target among the content corresponding to the nodes classified into the cluster selected according to the recommendation level.

11. The information processing device according to claim 8,
wherein the feedback acquisition unit estimates a preference level of the user for the content according to a type of action of the user indicated by the feedback, and
wherein the learning target recommendation unit computes a recommendation level of the cluster based on the preference level for the content corresponding to the nodes classified into the cluster, and thereby recommends the content that is a learning target to the user based on the recommendation level

12. The information processing device according to claim 11,
wherein the learning support information generation unit further includes a difficulty level estimation unit that estimates a difficulty level of the content corresponding to the nodes, and
wherein the learning target recommendation unit recommends content having the difficulty level set according to the recommendation level to the user as a learning target among the content corresponding to the nodes classified into the cluster that is selected according to the recommendation level.

13. The information processing device according to claim 1, wherein the learning support information generation unit includes an exercise question generation unit that generates an exercise question with regard to the content as a multiple-choice question that has the title of content corresponding to another node having a direct link to each of the nodes corresponding to the content as an option of a correct answer.

**14.** The information processing device according to claim 13, wherein the exercise question generation unit has the titles of content corresponding to other nodes having indirect links to each of the nodes as options of wrong answers of the multiple-choice question.

**15.** The information processing device according to claim 13,
wherein the content analysis unit analyzes the group of content by classifying the nodes into clusters, and
wherein the exercise question generation unit selects nodes to be used as options of the multiple-choice question from nodes that are classified into the same cluster as the nodes corresponding to the content.

**16.** The information processing device according to claim 13,
wherein the learning support information generation unit further includes
a feedback acquisition unit that acquires feedback of a user on the content, and
a learning target recommendation unit that recommends the content that is a learning target to the user based on the feedback, and
wherein the exercise question generation unit generates an exercise question with respect to the recommended content.

**17.** The information processing device according to claim 1,
wherein the learning support information generation unit further includes
a difficulty level estimation unit that estimates a difficulty level of the content with respect to the nodes,
a feedback acquisition unit that acquires feedback of a user on the content and estimates a preference level of the user for the content according to a type of action of the user indicated by the feedback,
and a cost computation unit that computes an acquisition cost of the user incurred for the content based on the difficulty level and the preference level.

**18.** The information processing device according to claim 17, wherein, the learning support information generation unit further includes an allocation decision unit that decides allocation of the content to a plurality of users based on the acquisition cost when the plurality of users learn knowledge provided as at least a part of the group of content.

**19.** An information processing method comprising:

analyzing a group of content by setting individual pieces of content included in the group of content as nodes of a graph structure and a link between the pieces of the content as a link of the graph structure; and
generating learning support information that supports learning of knowledge provided as at least a part of the group of content based on a result of the analysis.

**20.** A system configured to include
a terminal device and
one or more server devices that provide a service to the terminal device,
and to provide, in cooperation of the terminal device with the one or more of server devices,
a function of analyzing a group of content by setting individual pieces of content included in the group of content as nodes of a graph structure and a link between the pieces of the content as a link of the graph structure,
and a function of generating learning support information that supports learning of knowledge provided as at least a part of the group of content based on a result of the analysis.

# FIG.1

10

100

**TERMINAL DEVICE**

110

INPUT AND OUTPUT
UNIT

130

CONTROL UNIT

200

**SERVER**

210

CONTENT ANALYSIS
UNIT

230

LEARNING SUPPORT
INFORMATION
GENERATION UNIT

300

KNOWLEDGE
CONTENT

EP 2 879 118 A1

FIG.2

EP 2 879 118 A1

## FIG.3

TERMINAL DEVICE 500

INPUT AND OUTPUT UNIT 110

CONTENT ANALYSIS UNIT 210

KNOWLEDGE CONTENT 300

CONTROL UNIT 130

LEARNING SUPPORT INFORMATION GENERATION UNIT 230

EP 2 879 118 A1

**FIG.4**

1101

1105  1105a  1107a  1103

beibei
Level : 1

Learn | Play | Profile | Archive

1107

**Surprise me!**

Hidden Markov model

**Hidden Markov model**

A hidden Markov model (HMM) is a **statistical Markov model** ------------------------------
as the simplest **dynamic Bayesian network**. ------------.

In a regular **Markov model**, the state is ------------------------------------------
------------------------------------------------------------------------------
-------------------------------------------.

**My learning objectives**

1109

- Hierarchical clustering ✕
- Bayesian network ✕
- Latent semantic analysis ✕
- Boltzmann machine ✕
- Decision tree ✕
- Viterbi algorithm ✕

**Description in terms of urns**

-------------------------------------------------------------------------------
-------------------------------------------------------------------------------
-------------------------------------------------------------------------------
-------------------------------------.

**Recommendations**

1111

- Optimal discriminant analysis
- Phase-of-firing code
- Interactive evolutionary computation
- Spiking neural network
- Sepp Hochreiter
- Conditional random field
- Multiclass classification
- Relevance vector machine

**Architecture**

-------------------------------------------------------------------------------
-------------------------------------------------------------------------------
-------------------------------------------------------------------------------
-------------------------------------.

EP 2 879 118 A1

# FIG.5

1113

taiko
Level : 3

Learn | Play | Profile | Archive

1115

40

Challenge Area

Challenge Box

Total (11)

● Urgent (6)
● Review (0)
● New (5)
● Extra (0)

1123

✓ Which is the most closely related concept to ID3 algorithm?

1117

○ Machine learning

○ Inductive logic programming

○ Unsupervised learning

○ Inductive transfer

◉ Document classification

1119

Message Area

Correct! You just won some points!

1125

Next

1121

EP 2 879 118 A1

FIG.6

EP 2 879 118 A1

# FIG.7

LEARNING SUPPORT INFORMATION GENERATION UNIT  ~230

- DIFFICULTY LEVEL ESTIMATION UNIT  ~231
- FEEDBACK ACQUISITION UNIT  ~233
- LEARNING TARGET RECOMMENDATION UNIT  ~235
- EXERCISE QUESTION GENERATION UNIT  ~237
- ALLOCATION DECISION UNIT  ~239
- COST COMPUTATION UNIT  ~241

CONTENT ANALYSIS UNIT  ~210

- CLUSTERING UNIT  ~213
- DATA ACQUISITION UNIT  ~211

DB  ~250

EP 2 879 118 A1

FIG.8

FIG.9

GRAPH STRUCTURE
DB

2501

CLUSTERING UNIT

213

CLUSTER
DB

2503

## FIG.10

GRAPH STRUCTURE DB — 2501

NODE TABLE — 2501-1

| NODE ID | TITLE | BODY TEXT |
|---|---|---|
| 1 | Tennis | XXXXX.... |
| 2 | Baseball | YYYYY.... |
| 3 | Football | ZZZZZ.... |
| : | : | : |

LINK TABLE — 2501-2

| NODE ID | LINK DESTINATION |
|---|---|
| 1 | 3, 11, ... |
| 2 | 11, 23, ... |
| 3 | 1 |
| : | : |

# FIG.11

2503

CLUSTER DB

CLUSTER TABLE 2503-1

| NODE ID | CLUSTER ID | CENTRALITY |
|---------|-----------|-----------|
| 1 | 1 | 0.746 |
| 2 | 5 | 0.575 |
| 3 | 1 | 0.124 |
| ⋮ | ⋮ | ⋮ |

# FIG.12

```
                    ┌─────────────┐
                    │    START    │
                    └─────────────┘
                           │
                           ▼
        ┌──────────────────────────────────┐
        │     ACQUIRE LINK INFORMATION      │ ～S101
        │          FOR ALL NODES            │
        └──────────────────────────────────┘
                           │
                           ▼
        ┌──────────────────────────────────┐
        │        EXECUTE CLUSTERING         │ ～S103
        └──────────────────────────────────┘
                           │
                           ▼
        ┌──────────────────────────────────┐
        │     RECORD CLUSTER ASSIGNED TO    │ ～S105
        │            EACH NODE              │
        └──────────────────────────────────┘
                           │
                           ▼
                    ┌─────────────┐
                    │     END     │
                    └─────────────┘
```

# FIG.13

```
              ┌───────────┐
              │   START   │
              └─────┬─────┘
                    │
                    ▼
   ┌─────────────────────────────────┐
   │      ACQUIRE LINK INFORMATION   │────  S111
   │          FOR ALL NODES          │
   └─────────────────┬───────────────┘
                     │
                     ▼
   ┌─────────────────────────────────┐
   │       COMPUTE CENTRALITY OF     │────  S113
   │           EACH NODE             │
   └─────────────────┬───────────────┘
                     │
                     ▼
   ┌─────────────────────────────────┐
   │       RECORD CENTRALITY OF      │────  S115
   │           EACH NODE             │
   └─────────────────┬───────────────┘
                     │
                     ▼
              ┌───────────┐
              │    END    │
              └───────────┘
```

## FIG.14

CLUSTER DB — 2503

PROGRESS DB — 2505

DIFFICULTY LEVEL ESTIMATION UNIT — 231

DIFFICULTY LEVEL DB — 2507

FEEDBACK ACQUISITION UNIT — 233

U1

U2

U3

EP 2 879 118 A1

# FIG.15

2505

PROGRESS DB

PROGRESS TABLE 2505-1

| USER ID | NODE ID | NUMBER OF ANSWERS | NUMBER OF CORRECT ANSWERS | RATE OF CORRECTNESS |
|---------|---------|-------------------|---------------------------|---------------------|
| 1 | 1 | 2 | 1 | 0.5 |
| 1 | 3 | 4 | 2 | 0.5 |
| 2 | 4 | 10 | 4 | 0.4 |
| 2 | 2 | 5 | 1 | 0.2 |
| 3 | 1 | 4 | 1 | 0.25 |

## FIG.16

_2507_

### DIFFICULTY LEVEL DB

DIFFICULTY LEVEL TABLE _2507-1_

| USER ID | NODE ID | DIFFICULTY LEVEL | NORMALIZED DIFFICULTY LEVEL |
|---------|---------|------------------|------------------------------|
| 1 | 1 | 10.0 | 0.3333 |
| 1 | 3 | 30.0 | 1.0000 |
| 2 | 4 | 1.0 | 0.05 |
| 2 | 2 | 20.0 | 1.0000 |
| 3 | 1 | 5.0 | 1.0000 |

# FIG.17

```
           ┌─────────┐
           │  START  │
           └────┬────┘
                │
                ▼
  ┌──────────────────────────────┐
  │  ACQUIRE FEEDBACK (CORRECT OR │ ～S121
  │   INCORRECT) OF USER ON NODE  │
  └──────────────┬───────────────┘
                 │
                 ▼
  ┌──────────────────────────────┐
  │     RECORD AND UPDATE RATE OF │ ～S123
  │ CORRECTNESS OR THE LIKE OF NODE│
  └──────────────┬───────────────┘
                 │
                 ▼
           ┌─────────┐
           │   END   │
           └─────────┘
```

# FIG.18

START

ACQUIRE CLUSTER INFORMATION
FOR ALL NODES — S131

PERFORM LOOP ON TARGET NODE — S133

ACQUIRE CENTRALITY OF NODE — S135

ACQUIRE RATE OF CORRECTNESS OF
OTHER NODE THAT HAS BEEN LEARNED
HAVING SIMILAR CENTRALITY — S137

DECIDE DIFFICULTY LEVEL OF NODE BASED
ON AVERAGE OF RATE OF CORRECTNESS — S139

RECORD AND UPDATE DIFFICULTY LEVEL
OF NODE — S141

END

FIG.19

CLUSTER
DB

2503

DIFFICULTY LEVEL
ESTIMATION UNIT

231

DIFFICULTY LEVEL
DB

2507

EP 2 879 118 A1

# FIG.20

START

ACQUIRE CENTRALITY OF NODE — S151

DECIDE DIFFICULTY LEVEL OF
NODE BASED ON CENTRALITY — S153

RECORD AND UPDATE
DIFFICULTY LEVEL OF NODE — S155

END

**FIG.21**

CLUSTER DB `2503`

DIFFICULTY LEVEL DB `2507`

CLUSTER PROGRESS DB `2511`

PROGRESS DB `2505`

LEARNING TARGET RECOMMENDATION UNIT `235`

RECOMMENDED NODE (NEW AREA) `2509`

U1

FEEDBACK ACQUISITION UNIT `233`

U2

U3

EP 2 879 118 A1

# FIG.22

2511

CLUSTER PROGRESS DB

CLUSTER PROGRESS TABLE          2511-1

| USER ID | CLUSTER ID | NUMBER OF ANSWERS |
|---------|-----------|-------------------|
| 1 | 1 | 23 |
| 1 | 3 | 45 |
| 2 | 4 | 107 |
| 2 | 2 | 53 |
| 3 | 1 | 46 |

# FIG.23

START

↓

ACQUIRE CLUSTER INFORMATION AND PROGRESS INFORMATION (NODE) — S161

↓

GENERATE CLUSTER PROGRESS INFORMATION — S163

↓

DECIDE RECOMMENDED CLUSTER AND RANKING — S165

↓

EXTRACT NODE INCLUDED IN TOP RECOMMENDED CLUSTER — S167

↓

OUTPUT NODE HAVING PREDETERMINED DIFFICULTY LEVEL OR LOWER AS RECOMMENDED NODE — S169

↓

END

# FIG.24

2517
CLUSTER PREFERENCE DB

2507
DIFFICULTY LEVEL DB

2515
RECOMMENDED NODE

235
LEARNING TARGET RECOMMENDATION UNIT

2513
PREFERENCE DB

U1

2503
CLUSTER DB

233
FEEDBACK ACQUISITION UNIT

2519
ACTION DB

# FIG.25

2513

PREFERENCE DB

PREFERENCE TABLE 2513-1

| USER ID | NODE ID | PREFERENCE SCORE | NORMALIZED PREFERENCE SCORE |
|---|---|---|---|
| 1 | 1 | 10.0 | 0.33333 |
| 1 | 3 | 30.0 | 1.0 |
| 2 | 4 | 1.0 | 0.05 |
| 2 | 2 | 20.0 | 1.0 |
| 3 | 1 | 5.0 | 1.0 |

# FIG.26

2517

CLUSTER PREFERENCE DB

CLUSTER PREFERENCE TABLE 2517-1

| USER ID | CLUSTER ID | PREFERENCE SCORE |
|---------|-----------|------------------|
| 1 | 1 | 231.0 |
| 1 | 3 | 49.0 |
| 2 | 2 | 105.0 |
| 2 | 4 | 52.0 |
| 3 | 1 | 5.0 |

# FIG.27

2519

ACTION DB

ACTION TABLE    2519-1

| TYPE OF ACTION | WEIGHT |
|---|---|
| EXERCISE QUESTION SOLUTION | 5 |
| REFERENCE | 1 |
| BOOKMARK | 3 |
| ⋮ | ⋮ |

# FIG.28

```
        ┌─────────────┐
        │    START    │
        └─────────────┘
               │
               ▼
┌──────────────────────────────┐
│  ACQUIRE FEEDBACK (ACTION) OF │ ～S171
│        USER ON NODE           │
└──────────────────────────────┘
               │
               ▼
┌──────────────────────────────┐
│  ACQUIRE WEIGHT CORRESPONDING │ ～S173
│          TO ACTION            │
└──────────────────────────────┘
               │
               ▼
┌──────────────────────────────┐
│  ADD PREFERENCE SCORE OF NODE │ ～S175
└──────────────────────────────┘
               │
               ▼
        ┌─────────────┐
        │     END     │
        └─────────────┘
```

# FIG.29

```
                    ┌─────────┐
                    │  START  │
                    └────┬────┘
                         │
                         ▼
        ┌──────────────────────────────────┐
        │  ACQUIRE CLUSTER INFORMATION AND  │╲
        │  PREFERENCE INFORMATION (NODE)    │  S181
        └──────────────┬───────────────────┘
                       │
                       ▼
        ┌──────────────────────────────────┐
        │  GENERATE CLUSTER PREFERENCE      │╲
        │  INFORMATION                      │  S183
        └──────────────┬───────────────────┘
                       │
                       ▼
        ┌──────────────────────────────────┐
        │  COMPUTE RECOMMENDED CLUSTER      │╲
        │  AND RANKING                      │  S185
        └──────────────┬───────────────────┘
                       │
                       ▼
        ┌──────────────────────────────────┐
        │  EXTRACT NODE INCLUDED IN         │╲
        │  RECOMMENDED CLUSTER OF           │  S187
        │  PREDETERMINED RANKING            │
        └──────────────┬───────────────────┘
                       │
                       ▼
        ┌──────────────────────────────────┐
        │ OUTPUT NODE HAVING DIFFICULTY LEVEL│╲
        │ WITHIN PREDETERMINED RANGE AS     │  S189
        │ RECOMMENDED NODE                  │
        └──────────────┬───────────────────┘
                       │
                       ▼
                    ┌─────────┐
                    │   END   │
                    └─────────┘
```

**FIG.30**

# FIG.31

START

ACQUIRE INFORMATION OF RECOMMENDED NODE ～S191

EXECUTE LOOP ON RECOMMENDED NODE ～S193

SELECT CORRECT ANSWER FROM NODE HAVING PREDETERMINED DIFFICULTY LEVEL OR HIGHER AMONG OTHER NODES DIRECTLY LINKED TO NODE ～S195

SELECT WRONG ANSWER FROM OTHER NODES INDIRECTLY LINKED IN CERTAIN DISTANCE FROM NODE ～S197

GENERATE QUESTION BY ASSOCIATING CORRECT ANSWER AND WRONG ANSWER ～S199

OUTPUT GENERATED QUESTION ～S201

END

# FIG.32

EP 2 879 118 A1

# FIG.33

```
                    ┌─────────┐
                    │  START  │
                    └────┬────┘
                         │
                         ▼
      ┌──────────────────────────────────────┐
      │  ACQUIRE INFORMATION OF TARGET NODE   │ ── S211
      │          AND TARGET MEMBER            │
      └──────────────────┬───────────────────┘
                         │
                         ▼
      ┌──────────────────────────────────────┐
      │       EXECUTE LOOP ON TARGET NODE     │ ── S213
      └──────────────────┬───────────────────┘
                         │
                         ▼
      ┌──────────────────────────────────────┐
      │     EXECUTE LOOP ON TARGET MEMBER     │ ── S215
      └──────────────────┬───────────────────┘
                         │
                         ▼
      ┌──┬────────────────────────────────┬──┐
      │  │   COMPUTE ACQUISITION COST OF   │  │ ── S217
      │  │        MEMBER FOR NODE          │  │
      └──┴────────────────────────────────┴──┘
                         │
                         ▼
      ┌──────────────────────────────────────┐
      │                                      │
      └──────────────────┬───────────────────┘
                         │
                         ▼
      ┌──────────────────────────────────────┐
      │                                      │
      └──────────────────┬───────────────────┘
                         │
                         ▼
      ┌──────────────────────────────────────┐
      │    APPLY RESTRICTIVE CONDITION AND    │ ── S219
      │       COMPUTE OPTIMUM SOLUTION        │
      └──────────────────┬───────────────────┘
                         │
                         ▼
      ┌──────────────────────────────────────┐
      │      OUTPUT ALLOCATION INFORMATION    │ ── S221
      └──────────────────┬───────────────────┘
                         │
                         ▼
                    ┌─────────┐
                    │   END   │
                    └─────────┘
```

# FIG.34

START

ACQUIRE DIFFICULTY LEVEL
AND PREFERENCE SCORE — S231

PREFERENCE
SCORE > 0? — S233

NO

YES

ACQUISITION COST=
{a*(1-DIFFICULTY LEVEL)+
b*(1-PREFERENCE LEVEL)}*c — S235

COMPUTE MINIMUM NUMBER OF
STEPS FROM OTHER NODES HAVING
PREFERENCE SCORE > 0 — S237

ACQUISITION COST=
{a*(1-DIFFICULTY LEVEL)+b}*
(NUMBER OF STEPS+c) — S239

END

# FIG.35

## INTERNATIONAL SEARCH REPORT

International application No.

PCT/JP2013/064780

| A. CLASSIFICATION OF SUBJECT MATTER |
|---|
| *G09B5/00*(2006.01)i, *G06F17/30*(2006.01)i, *G06Q50/20*(2012.01)i, *G09B19/00* (2006.01)i |

According to International Patent Classification (IPC) or to both national classification and IPC

| B. FIELDS SEARCHED |
|---|
| Minimum documentation searched (classification system followed by classification symbols) |
| G09B5/00-7/12, G09B19/00, G06F17/30, G06Q50/20 |

Documentation searched other than minimum documentation to the extent that such documents are included in the fields searched

| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| X<br>A | Norihito TOYOTA, "Clustering and Structuring of Instructual Materials based on Weighted Graph", Dai 51 Kai (Heisei 7 Nen Koki) Zenkoku Taikai Koen Ronbunshu (1) Kiso Riron Oyobi Kiso Gijutsu Network Kyoiku Oyo, Information Processing Society of Japan, 20 September 1995 (20.09.1995), pages 1-251 to 1-252 | 1,7,19-20<br>2-6,8-18 |
| A | JP 2006-78740 A (Fujitsu Ltd.),<br>23 March 2006 (23.03.2006),<br>entire text<br>(Family: none) | 1-20 |
| A | JP 2009-48098 A (Fujitsu Ltd.),<br>05 March 2009 (05.03.2009),<br>entire text<br>(Family: none) | 1-20 |

☒ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05 August, 2013 (05.08.13) | 13 August, 2013 (13.08.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2013/064780 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2003-241628 A  (Nihon Unisys, Ltd.), 29 August 2003 (29.08.2003), entire text (Family: none) | 1-20 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011232445 A
- US 20060112105 A
- JP 2011186780 A